# FASCICULE DE BREVET EUROPEEN

(11) **EP 3 823 818 B1**
(45) Date de publication et mention de la délivrance du brevet: **07.09.2022**
(21) Numéro de dépôt: 19753164.3
(22) Date de dépôt: 16.07.2019
(51) Int. Cl.: B29C 65/20, B29C 65/32, B29C 65/22, B29C 65/72, B29C 65/08, B29C 65/10, B29C 65/14, B29C 70/30, B29K 101/12, B29K 105/06, B29L 31/30, B29L 7/00, B29L 9/00

(54) **PROCÉDÉ DE SOUDAGE DE PIÈCES À BASE DE MATÉRIAU THERMOPLASTIQUE**
VERFAHREN ZUM VERSCHWEISSEN VON TEILEN AUS THERMOPLASTISCHEM KUNSTSTOFF
METHOD FOR WELDING PARTS MADE OF THERMOPLASTIC MATERIAL

(30) Priorité: 16.07.2018 FR 1856537; 17.05.2019 FR 1905222; 17.05.2019 FR 1905223
(43) Date de publication de la demande: 26.05.2021
(73) Titulaire: ARKEMA FRANCE, 92700 Colombes (FR); Institut de Soudure, 93420 Villepinte (FR)
(72) Inventeur: GLOTIN, Michel, 92210 Saint Cloud (FR); CAUCHOIS, Jean-Pierre, 54000 Nancy (FR); PHILIPPE, Aurélien, 57940 Volstroff (FR); KLEIN, Philippe, 57520 Rouhling (FR)
(74) Mandataire: Bandpay & Greuter
(86) Numéro de dépôt international: PCT/FR2019/051775
(87) Numéro de publication internationale: WO 2020/016514

(56) Documents cités:
- FR-A1- 2 488 828
- US-A- 4 175 998

## Description

### Domaine technique

La présente invention concerne un procédé de soudage par induction, ainsi qu'une installation pour la mise en œuvre de ce procédé.

### Arrière-plan technique

Les matériaux composites comprenant des fibres de renfort, par exemple des fibres de carbone et/ou des fibres de verre, dispersées dans une matrice polymère thermoplastique ont de nombreux usages possibles, et notamment, dans le domaine de l'aéronautique, la fabrication du fuselage des avions.

La dispersion de fibres dans une matrice polymère thermoplastique confère des propriétés particulières aux pièces composites rigides, notamment en termes de résistance à la fissuration, de tenue en fatigue, de recyclabilité.

Les pièces en matériaux composites sont typiquement composées de plusieurs plis (ou couches) superposées et laminées ensemble, les fibres dans chaque pli ayant une direction principale le plus souvent différente de la direction principale des fibres des couches adjacentes. Ces plis (ou couches) sont également dénommés « semi-produits », lesquels peuvent être obtenus par exemple par imprégnation de fibres étant généralement unidirectionnelles continues par la résine. Il existe différents procédés de fabrication, dans lesquels la résine peut être soit fondue, soit dissoute dans un solvant, soit sous forme de poudre, en lit fluidisé, ou dispersée dans une suspension aqueuse. Les fibres imprégnées sont ensuite le cas échéant débarrassées du solvant ou de l'eau puis chauffées avant de fondre la résine retenue et former le semi-produit. Il est aussi possible d'apporter la résine thermoplastique au sein des fibres de renfort par mélange (co-mélange) intime de fibres de renfort avec des fibres thermoplastiques amenées à être fondues pour former la résine entourant les fibres de renfort. Les semi-produits peuvent également être obtenus en imprégnant un tissu fibreux ou un ensemble de fils unidirectionnels cousus (NCF ou « *Non-Crimp-Fabrics* ») par une poudre de polymère qui, une fois fondue constituera la matrice du composite. Un semi-produit est caractérisé par une répartition homogène de la résine (appelée alors matrice) autour des fibres de renfort.

Pour certaines applications, il peut être nécessaire d'associer plusieurs pièces composites comme, par exemple, dans le cas du fuselage d'avion, un panneau de peau, des raidisseurs et des cadres.

Ces pièces composites peuvent être assemblées par soudage, notamment par une technologie de type induction. Ce procédé consiste à utiliser un inducteur émettant un champ magnétique. Ce champ magnétique provoque l'élévation en température des matériaux sensibles à l'induction, jusqu'à une température propice au soudage des polymères thermoplastiques.

A l'heure actuelle, le soudage par induction de pièces composites implique soit la chauffe directe de matériaux composites à assembler, soit la chauffe d'un insert (ou suscepteur) réactif au champ magnétique et intrusif (généralement en matériau métallique), préalablement déposé au niveau de l'interface à assembler.

Cependant, un procédé basé sur la chauffe directe des fibres de carbone des pièces composites à assembler présente les désavantages suivants :
- sa mise en œuvre nécessite que les fibres de carbone soient continues et présentent des orientations ou des enchevêtrements favorables à la création de boucles de courant dans le matériau;
- ce procédé ne permet généralement pas de localiser la chauffe au niveau de la seule interface ; ceci entraine souvent un chauffage de l'ensemble de la pièce composite qui, s'il n'est pas corrigé par des refroidisseurs adaptés, peut se traduire par un risque de décompactage pouvant entrainer un délaminage des plis de la pièce composite ;
- la chaleur produite peut aussi intervenir dans des zones limitrophes au cordon de soudage ; ces dernières, n'étant pas soumises à des pressions de compactage, peuvent subir les mêmes effets négatifs que ceux cités ci-dessus ;
- il est généralement nécessaire d'ajouter un matériau sensible à l'induction tel qu'un film thermoplastique contenant des charges ou des structures conductrices ou ferroélectriques à l'interface de soudage ; l'ajout de tels films rend très difficile la certification des pièces soudées pour des applications aéronautiques ;
- il n'est pas possible d'utiliser la technique de soudage par induction lorsque les fibres de renfort du matériau composite ne sont pas conductrices ou ferromagnétiques (par exemple, des fibres de verre, d'aramide...) ;
- ce procédé est sensible à la nature, la configuration (càd le plan de drapage) et l'épaisseur des pièces à souder ;
- ce procédé, appliqué à la soudure de pièces en composite carbone, ne permet pas de garantir les paramètres de soudage dans les zones de début et de fin de soudure et ainsi l'homogénéité du joint soudé au moyen de cette technologie dynamique.

Afin de surmonter ces problèmes, différentes stratégies ont été proposées.

Par exemple, le document WO 2013/110270 décrit un procédé de soudage par induction dans lequel une unité de refroidissement suit l'inducteur de manière à ce que la surface de la pièce composite qui fait face à l'inducteur soit refroidie et ne fonde pas.

Le document EP 1849581 concerne un dispositif de soudage par induction pour la fixation d'une pièce plastique moulée sur le pourtour d'une pièce tubulaire constituée d'au moins une couche métallique et une couche de résine thermoplastique, le dispositif comprenant un élément à grande perméabilité magnétique, qui canalise les lignes de champ magnétique.

Comme indiqué ci-dessus, une autre solution couramment employée consiste à introduire un suscepteur constitué d'un matériau plus sensible à l'induction que le carbone, par exemple une grille métallique, à l'interface des pièces à souder. En adaptant l'intensité du champ magnétique émis, on peut localiser le chauffage au niveau du suscepteur et donc à l'interface des pièces à souder.

Par exemple, le document EP 2907651 décrit un procédé de soudage par induction dans lequel un ensemble formé de deux pièces à souder et d'un absorbeur de champ (ou suscepteur) positionné à l'interface des pièces est soumis à un champ magnétique par un inducteur selon une incidence particulière.

Le document EP 2150393 décrit un procédé de soudage par induction dans lequel deux pièces sont placées dans un moule pour y être couplées, au moins une surface de contact entre les pièces comprenant un moyen de couplage à activation thermique et un composant sensible à l'induction.

Le document WO 2012/158293 décrit un procédé de soudage par induction dans lequel un suscepteur est placé entre deux pièces composites puis un champ magnétique parallèle au suscepteur est généré.

Le document EP 0720908 décrit un procédé de soudage thermoplastique dans lequel un suscepteur est placé à l'interface des deux pièces en résine à souder.

Le document US 5,753,068 concerne un appareil de soudage thermoplastique pour le soudage de pièces composites comprenant un suscepteur conducteur à l'interface à souder.

Le document US 5,902,935 traite d'une méthode d'évaluation de l'intégrité et de la résistance d'une soudure thermoplastique dans laquelle est incorporé un suscepteur.

Le document US 6,323,468 décrit un appareil de soudage à induction pour assembler deux composants générant un champ magnétique entrainant le chauffage d'un suscepteur placé entre les deux composants à souder.

Le document WO 2008/087194 décrit un procédé de soudage par induction d'un matériau thermoplastique à un matériau composite comprenant une matrice thermodurcissable renforcée par des fibres, dans lequel, de préférence, un matériau conducteur est positionné à l'interface des matériaux à souder et chauffé par induction.

Le document US 4,978,825 décrit un procédé de soudage par induction d'un assemblage comprenant deux pièces entre lesquelles se trouve un suscepteur qui est chauffé par induction, l'inducteur étant incorporé à l'intérieur d'un rouleau de pression.

Le document WO 2015/140270 concerne un procédé de soudage thermoplastique de deux pièces en matériau composite thermoplastique. Des inserts métalliques sont placés entre les deux surfaces des pièces à souder pour que soit générés dans ces inserts des courants induits produisant de la chaleur, l'assemblage à souder étant enfermé dans une enceinte étanche dans laquelle est appliqué un vide partiel.

Le document US 4,175,998 A concerne des soudures pour une isolation en mousse thermoplastique déposée en spirale autour d'une structure.

Cependant, l'utilisation d'un suscepteur peut résulter en un soudage non homogène et comporte l'inconvénient d'introduire un tiers corps non souhaitable dans l'assemblage soudé. La présence d'un tiers corps à l'interface des pièces qui ont été soudées peut notamment empêcher ou restreindre l'utilisation des pièces soudées dans le domaine de l'aéronautique. Le document FR 2488828 concerne un procédé de soudage de feuilles en matériau thermoplastique, correspondant à des feuilles souples, lesquelles sont susceptibles de former de petites ondulations à la manière d'un faux pli. Ce procédé consiste notamment à placer les deux feuilles à souder de sorte que leurs bords adjacents soient en recouvrement, déplacer un coin chaud entre les bords en recouvrement, apporter une certaine quantité de matériau thermoplastique, et presser les bords en recouvrement en les laissant refroidir. Le document FR 2488828 ne décrit pas le soudage de pièces rigides.

Il existe donc un réel besoin de fournir un procédé d'assemblage efficace, performant et rapide de pièces à base de matériaux thermoplastiques, en particulier de pièces rigides à base de matériaux thermoplastiques, évitant les inconvénients mentionnés ci-dessus.

Il existe également un réel besoin de fournir un procédé d'assemblage par chauffage localisé à l'interface de pièces à base de matériaux thermoplastiques efficace, performant, rapide et dynamique.

Il existe un réel besoin de fournir un procédé permettant l'assemblage de pièces par chauffage. En particulier, il existe un réel besoin de fournir un procédé efficace permettant l'assemblage de pièces par chauffage, sans apport de matière, sans déformation, sans délamination et sans décompactage des pièces à souder.

### Résumé de l'invention

L'invention concerne en premier lieu un procédé de soudage d'au moins deux pièces, en particulier deux pièces rigides, comprenant un matériau thermoplastique et ayant des surfaces à souder respectives, comprenant :
- l'insertion d'un insert entre les surfaces à souder des deux pièces, ledit insert (4) ayant une épaisseur de 5 mm ou moins;
- la fourniture de chaleur par ledit insert;
dans lequel l'insert se déplace par rapport aux pièces à souder lors du soudage, selon une direction de soudage ;
caractérisé en ce que l'insert comprend un matériau sensible à l'induction, et la chaleur de l'insert est fournie par la génération d'un champ magnétique par au moins un inducteur.

Dans des modes de réalisation, l'insert et l'inducteur se déplacent conjointement par rapport aux pièces à souder lors du soudage, selon la direction de soudage.

Dans des modes de réalisation, le procédé comprend en outre la mise en contact des surfaces à souder des deux pièces à souder par application d'une pression sur au moins une des deux pièces en amont et/ou en aval de la position de l'insert par rapport à la direction du soudage.

Dans des modes de réalisation, le procédé comprend en outre une étape de refroidissement des surfaces libres des pièces à souder, notamment par application d'un bloc de régulation thermique sur au moins une des deux pièces derrière la position de l'insert par rapport à la direction de soudage, et devant le ou les éléments d'application de pression, si présent.

Dans des modes de réalisation, l'insert est en contact avec chacune des surfaces à souder des deux pièces.

Dans des modes de réalisation, l'insert n'est pas en contact avec au moins une des surfaces à souder des deux pièces.

Dans des modes de réalisation, le procédé comprend en outre le déplacement, conjointement au déplacement de l'insert, d'un élément écarteur entre les surfaces à souder des deux pièces, l'élément écarteur étant positionné devant l'insert dans le sens de la direction du soudage.

Dans des modes de réalisation, au moins une des deux pièces, de préférence les deux pièces, est en matériau composite comprenant des fibres de renfort dans une matrice du matériau thermoplastique.

Dans des modes de réalisation, les fibres de renfort sont des fibres de carbone et/ou des fibres de verre, ou toute autre nature de fibre pouvant renforcer ou fonctionnaliser un polymère.

Dans des modes de réalisation, au moins une des deux pièces, de préférence les deux pièces, est constituée essentiellement, ou constituée, du matériau thermoplastique.

Dans des modes de réalisation, le matériau thermoplastique est choisi parmi le groupe des polyamides, des polyimides, en particulier les polyétherimides, des polyaryléthercétones, en particulier les polyéthercétonecétones et polyétheréthercétones, du polytéréphtalate d'éthylène, des polyoléfines, en particulier le polypropylène, du polysulfure de phénylène, des polysulfones, des polymères chlorés, en particulier le polychlorure de vinyle (PVC) et le polyfluorure de vinylidène (PVDF), des polymères acryliques ou méthacryliques, et est de préférence un polyaryléthercétone tel que le polyéthercétonecétone ou le polyétheréthercétone.

Dans des modes de réalisation, au moins une des deux pièces, de préférence les deux pièces, est une structure multicouche.

Dans des modes de réalisation, la couche comportant la surface à souder d'au moins une des deux pièces, de préférence des deux pièces:
- comprend un matériau thermoplastique ayant une température de fusion inférieure à celle du matériau thermoplastique des autres couches des pièces; et/ou
- comprend un matériau thermoplastique ayant une viscosité inférieure à celle du matériau thermoplastique des autres couches des pièces; et/ou
- comprend une quantité volumique en matériau thermoplastique supérieure à celles des autres couches des pièces; et/ou
- comprend un matériau de renfort à forte densité de croisements, de préférence un tissé de carbone ; et/ou
- comprend une couche fibreuse unidirectionnelle orientée dans le sens de la soudure.

Dans des modes de réalisation, le procédé ne comprend pas une étape d'ajout de matière thermoplastique additionnelle, notamment à l'interface des surfaces à souder.

Dans des modes de réalisation, l'insert comprend un matériau métallique sensible à l'induction. L'insert est éventuellement recouvert, en totalité ou en partie, d'un revêtement fonctionnel apportant par exemple la propriété d'anti-corrosion (matériau anti-corrosion) ou facilitant le glissement de l'insert entre les deux pièces (matériau facilitant le glissement de l'insert entre les deux pièces).

Dans des modes de réalisation, l'insert est constitué d'un matériau ferromagnétique ayant une température de Curie Tc, ce qui pourrait faciliter le contrôle du procédé.

Dans des modes de réalisation, le procédé comprend en outre la formation d'un bourrelet (ou ménisque) de matériau thermoplastique à l'extrémité de l'interface de soudage.

Dans des modes de réalisation, les pièces sont des pièces de fuselage d'avion.

L'invention concerne également une installation de soudage d'au moins deux pièces, en particulier deux pièces rigides, comprenant un matériau thermoplastique et ayant des surfaces à souder respectives, comprenant :
- un support pour porter les deux pièces à souder ;
- un bras comportant à son extrémité un insert de chauffe, configuré pour être inséré entre les surfaces à souder des deux pièces ;
l'insert, d'une épaisseur de 5 mm ou moins, étant configuré pour se déplacer par rapport aux pièces à souder lors du soudage, selon une direction de soudage ;
caractérisée en ce que l'installation comprend un dispositif de génération de chaleur dudit insert par induction, ledit dispositif de génération de chaleur étant au moins un inducteur, et ledit insert comprenant un matériau sensible à l'induction.

Dans des modes de réalisation, l'insert et l'inducteur sont configurés pour se déplacer conjointement par rapport aux pièces à souder lors du soudage, selon la direction de soudage.

Dans des modes de réalisation, le bras comportant à son extrémité l'insert est solidaire de l'inducteur.

Dans des modes de réalisation, l'installation comprend en outre un ou plusieurs rouleaux de compactage et/ou un ou plusieurs rouleaux de plaquage.

Dans des modes de réalisation, l'installation comprend en outre au moins un bloc de régulation thermique.

Dans des modes de réalisation, les rouleaux de compactage et/ou les rouleaux de plaquage sont solidaires de l'inducteur.

Dans des modes de réalisation, le ou les rouleaux de compactage sont configurés pour être animés d'une vibration à une fréquence adaptée. Cette vibration est adaptée pour optimiser les phénomènes d'interpénétration nécessaires à l'obtention d'un soudage performant.

Dans des modes de réalisation, l'installation comprend une enceinte à température contrôlée, qui de préférence comporte une jupe souple.

Dans des modes de réalisation, l'insert est une plaque d'une épaisseur de 5 mm ou moins, préférentiellement de 0,3 à 5 mm, très préférentiellement de 0,3 à 3 mm, plus préférentiellement de 0,5 à 1,5 mm.

Dans des modes de réalisation, l'insert comprend un matériau métallique sensible à l'induction, et est éventuellement recouvert, en totalité ou en partie, d'un revêtement fonctionnel apportant par exemple la propriété d'anti-corrosion (matériau anti-corrosion) ou facilitant le glissement de l'insert entre les deux pièces (matériau facilitant le glissement entre les deux pièces).

Dans des modes de réalisation, l'installation comprend en outre un deuxième bras comportant à son extrémité un élément écarteur, éventuellement solidaire de l'insert.

Dans des modes de réalisation, le support est configuré pour être chauffé.

La présente invention permet de surmonter les inconvénients de l'état de la technique. Elle fournit plus particulièrement un procédé d'assemblage efficace, performant et rapide de pièces à base de matériaux thermoplastiques, en particulier de pièces rigides à base de matériaux thermoplastiques. En particulier, le procédé de l'invention ne nécessite pas l'insertion permanente d'un tiers corps dans l'assemblage soudé, tout en permettant un chauffage localisé préférentiellement à l'interface des pièces à souder. La localisation du chauffage dans la zone de l'interface à souder permet de limiter les effets thermiques dans les autres plis de la pièce composite et ainsi d'éviter toute altération de la qualité des pièces à assembler par délamination et/ou décompactage. Généralement, la qualité des pièces élémentaires avant assemblage a été contrôlée et validée ; il est donc très intéressant de disposer d'une technologie de soudage ne remettant pas en cause la qualité des pièces, comme c'est le cas avec la présente invention.

Cela est accompli grâce à l'utilisation d'un insert qui va fournir de la chaleur et qui se déplace par rapport aux pièces à souder selon la direction de soudage. La chaleur est générée par induction. Par exemple, le champ magnétique créé par l'inducteur produit des effets qui sont concentrés dans l'insert, ce qui induit une chauffe localisée au niveau de cet insert. L'insert se déplace par rapport aux pièces à souder selon la direction de soudage et n'est donc pas intégré dans l'assemblage final.

De plus, l'invention présente également un ou de préférence plusieurs des avantages suivants :
- le procédé selon l'invention permet le soudage de pièce rigide ;
- le procédé selon l'invention permet le soudage de tous types de matériaux thermoplastiques, y compris de matériaux ne comprenant pas d'éléments conducteurs (tels que des fibres de carbone ou autres fibres ou charges conductrices) ;
- le procédé peut permettre l'utilisation d'une puissance d'induction réduite par rapport aux procédés basés sur le chauffage du carbone contenu dans les pièces composites à souder ;
- le procédé peut permettre une meilleure maîtrise de la température de soudage ;
- le procédé peut permettre le soudage de pièces de grandes dimensions et/ou ayant une géométrie complexe, telle qu'une double courbure ;
- le procédé peut permettre une certaine tolérance vis-à-vis de la complémentarité que doivent comporter les surfaces à souder ;
- le procédé peut permettre de réduire la consommation d'énergie et de matériels, la chauffe étant localisée au niveau des surfaces à souder par un matériau plus sensible à l'induction que les matériaux des pièces à souder ;
- associé par exemple au choix d'un matériau optimisé pour l'un des plis de soudage des pièces à souder (c'est-à-dire un des plis à l'interface de soudage), le procédé selon l'invention peut permettre la formation de bourrelets (ou ménisques) à l'extrémité de l'interface de soudage, limitant ainsi les effets liés à l'endommagement et aux amorces de rupture

### Brève description des figures

**[****Fig. 1****]** représente une vue en perspective schématique d'une installation de soudage par induction selon la présente invention.
**[****Fig. 2****]** représente une vue en coupe schématique d'une installation de soudage par induction selon la présente invention.
**[****Fig. 3****]** représente une vue en coupe élargie de la zone A de la figure 2.
**[****Fig. 4****]** représente une vue en coupe élargie de la zone B de la figure 2.
**[****Fig. 5****]** représente une vue schématique de deux pièces soudées selon un mode de réalisation du procédé selon l'invention.
**[****Fig. 6****]** représente une vue schématique de deux pièces soudées selon un mode de réalisation du procédé selon l'invention.
**[****Fig. 7****]** représente une vue en coupe d'un insert à « effet ressort » dans un premier état de compression selon un mode de réalisation du procédé selon l'invention.
**[****Fig. 8****]** représente une vue en coupe de l'insert à « effet ressort » selon la figure 7 dans un deuxième état de compression selon un mode de réalisation du procédé selon l'invention.
**[****Fig. 9****]** représente une vue en coupe d'un insert à « effet ressort » dans un premier état de compression selon un mode de réalisation du procédé selon l'invention.
**[****Fig. 10****]** représente une vue en coupe de l'insert à « effet ressort » selon la figure 9 dans un deuxième état de compression selon un mode de réalisation du procédé selon l'invention.
**[****Fig. 11****]** représente une vue en coupe d'un insert et des plaques à souder selon un mode de réalisation du procédé selon l'invention.
**[****Fig. 12****]** représente une vue en perspective schématique d'un mode de réalisation de l'installation selon l'invention, comprenant deux rouleaux de compactage situés de part et d'autre des pièces à souder selon un mode de réalisation du procédé selon l'invention.
**[****Fig. 13****]** représente une vue en perspective schématique d'un déplacement relatif rectiligne de deux inducteurs par rapport à la direction de soudage.
**[****Fig. 14****]** représente une vue en perspective schématique d'un déplacement relatif sinusoïdal d'un inducteur par rapport à la direction de soudage.
**[****Fig. 15****]** représente une vue en perspective schématique d'un déplacement relatif rectiligne de quatre inducteurs par rapport à la direction de soudage, permettant un soudage surfacique.
**[****Fig. 16****]** représente une vue en perspective schématique d'un insert en forme de « U » selon un mode de réalisation d'un procédé de soudage par effet résistif (pas selon l'invention).
**[****Fig. 17****]** représente une vue en perspective schématique d'un insert selon un mode de réalisation d'un procédé de soudage par effet résistif (pas selon l'invention).
**[****Fig. 18****]** représente une vue en perspective schématique d'un insert selon un mode de réalisation d'un procédé de soudage par effet résistif (pas selon l'invention).

### Description détaillée

L'invention est maintenant décrite plus en détail et de façon non limitative dans la description qui suit.

On entend par « pièce rigide » une pièce qui ne se déforme pas ou se déforme peu sous son propre poids. La rigidité de la pièce peut être caractérisée par un test de déformation d'une éprouvette de la pièce à souder. Le test de déformation consiste en la préparation d'une éprouvette découpée dans la portion de la pièce à tester ayant l'épaisseur la plus faible (si épaisseur variable), ladite éprouvette ayant une longueur de 12 cm, une largeur de 1 cm. La rigidité est appréciée en posant et en centrant l'éprouvette sur deux appuis distants de 10 cm. Dans les conditions standards de température et de pression, l'éprouvette présente une flèche maximale en son centre de 1 cm, correspondant à une déformation relative par rapport à la longueur de 10 % maximum.

On entend par « pièce à souder » une pièce comprenant un matériau thermoplastique. La pièce peut être une pièce ayant une structure d'un seul bloc (pièce monocouche) ou une pièce ayant une structure multicouche (pièce multicouche).

On entend par « matériau composite », un matériau comprenant des fibres de renfort dans une matrice de matériau thermoplastique. On entend par « matériau non-composite », un matériau dépourvu de fibres de renfort.

Les expressions « matériau composite » « couche composite », « pli » et « semi-produit » sont utilisées de manière interchangeable. Les semi-produits peuvent être des imprégnés (ou « tapes ») sous forme d'une nappe de fibres dans une matrice de résine. Les fibres de renfort ont de préférence une orientation essentiellement unidirectionnelle dans les semi-produits. Les semi-produits peuvent également être des tissus fibreux ou des nappes de fils de renforts unidirectionnelles cousues appelées aussi NCF (« *Non-Crimp Fabrics* ») imprégnées de polymères. Les semi-produits peuvent également être des produits comprenant du polymère thermoplastique non renforcé de fibres de renfort continues, formulé ou non avec des charges diverses.

On entend par « pièce compactée » une pièce composée d'au moins deux couches superposées, laminées ensemble et compactées.

On entend par « pièce déposée » une pièce composée d'au moins deux couches superposées et laminées ensemble, sans compaction au moyen d'un équipement d'application de pression type autoclave ou presse.

On entend par « produit de soudage » un produit comprenant au moins deux pièces, telles que définies ci-dessus, soudées ensemble selon le procédé de la présente invention.

Sauf indication contraire, tous les pourcentages concernant des quantités indiquées sont des pourcentages volumiques.

Les procédés de soudage peuvent comprendre l'insertion d'un insert fournissant de la chaleur. La chaleur peut être générée par induction (invention), par effet résistif, par vibration, par frottement, par ultrasons, par utilisation d'un laser, par un flux de gaz chaud ou par conduction à partir d'une source externe de chaleur Selon la présente invention, la chaleur est générée par induction.

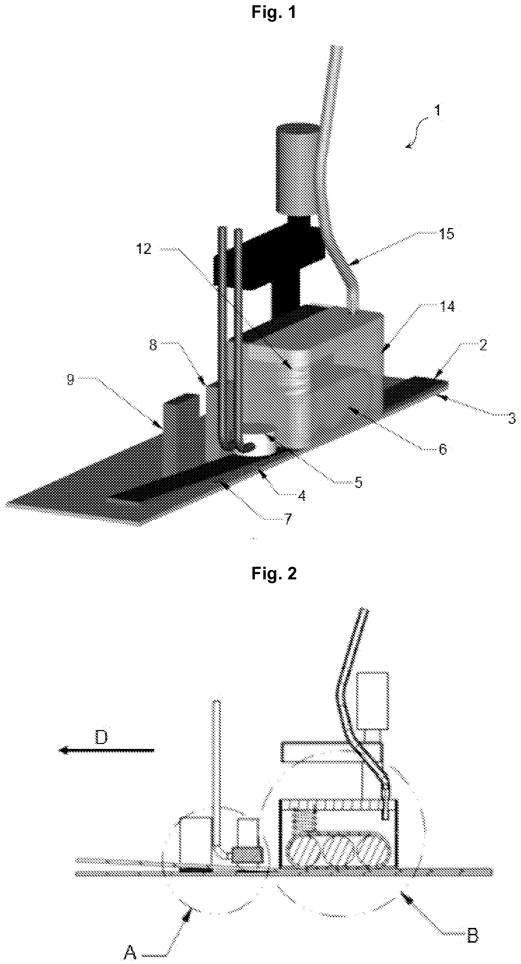

En référence aux figures 1 à 4, l'installation 1 est destinée à la mise en œuvre d'un procédé de soudage par induction de deux pièces rigides 2, 3, chacune comprenant un matériau thermoplastique et ayant des surfaces à souder 10, 11 respectives et des surfaces libres 17, 18 respectives. L'invention n'est cependant pas limitée au soudage de deux pièces et pourrait être appliquée au soudage de plus de deux pièces, par exemple au soudage d'une pièce avec une première autre pièce et une deuxième autre pièce, par exemple juxtaposées.

En particulier, les pièces 2,3 peuvent être rigides en ce qu'elles ne se déforment pas ou se déforment peu sous leur propre poids. Leur rigidité peut être caractérisée par un test de déformation d'une éprouvette de la pièce à souder. Le test de déformation consiste en la préparation d'une éprouvette découpée dans la portion de la pièce à tester ayant l'épaisseur la plus faible (si épaisseur variable), ladite éprouvette ayant une longueur de 12 cm et une largeur de 1 cm. La rigidité est appréciée en posant et en centrant l'éprouvette sur deux appuis distants de 10 cm. Dans les conditions standards de température et de pression, l'éprouvette présente une flèche maximale en son centre de 1 cm, correspondant à une déformation relative par rapport à la longueur de 10 % maximum.

Plus particulièrement, les pièces 2,3 sont aussi rigides dans les conditions thermiques de l'opération de soudage, c'est-à-dire qu'ils sont rigides avant, pendant et après le soudage.

Les pièces 2, 3 peuvent comprendre, l'une par rapport à l'autre, des matériaux thermoplastiques différents compatibles, ou bien un même matériau thermoplastique. On entend par « matériaux thermoplastiques compatibles » des matériaux thermoplastiques miscibles, c'est-à-dire des polymères dont le mélange présente une température de transition vitreuse intermédiaire à celles de ces polymères. Des exemples de matériaux thermoplastiques appropriés pour l'invention sont les polyamides, les polysulfones, le polysulfure de phénylène (PPS), les polyimides, en particulier les polyétherimides (PEI), les polyaryléthercétones (PAEK), en particulier les polyéthercétonecétones (PEKK) et polyétheréthercétones (PEEK), le polytéréphtalate d'éthylène, les polyoléfines telles que le polypropylène, les polymères chlorés tels que le polychlorure de vinyle (PVC) et le polyfluorure de vinylidène (PVDF), les polymères acryliques ou méthacryliques. Le matériau thermoplastique peut être un matériau thermoplastique amorphe, cristallin ou semi-cristallin.

Les polyamides peuvent notamment être un polyphtalamide (PPA), du PA 11, du PA 12, du PA 6, du PA 1010, du PA 66, du PA 46 ou un copolyamide.

Il peut également s'agir d'une combinaison de plusieurs des matériaux ci-dessus.

Avantageusement, les pièces 2, 3 comprennent du PPS, du PEI ou un PAEK tel que le PEEK ou le PEKK en tant que matériau thermoplastique.

Les pièces 2, 3 peuvent comprendre des charges (dont des fibres de renfort) et/ou des additifs fonctionnels. Parmi les additifs fonctionnels, on peut notamment inclure un ou des tensioactifs, stabilisants UV, stabilisants thermiques, agents biocides, modifiants chocs, et/ou agents expansifs.

Les charges peuvent comprendre des fibres ou des charges non fibreuses. Les charges non fibreuses peuvent notamment être des charges minérales telles que l'alumine, la silice, le carbonate de calcium, le dioxyde de titane, les billes de verre, le noir de carbone, le graphite le graphène et les nanotubes de carbone.

Les charges fibreuses peuvent être des fibres dites coupées ou des fibres de renforts continues.

En particulier, les pièces 2, 3 peuvent indépendamment être en matériau composite, ledit matériau composite comprenant des fibres de renfort dans une matrice du matériau thermoplastique. Les fibres de renfort permettent notamment de rigidifier les pièces.

Les fibres de renfort peuvent être notamment des fibres de verre, des fibres de quartz, des fibres de carbone, des fibres de graphite, des fibres de basalte, des fibres de silice, des fibres métalliques comme des fibres d'acier, des fibres d'aluminium ou des fibres de bore, des fibres céramiques comme des fibres de carbure de silicium ou de carbure de bore, des fibres naturelles végétales, des fibres organiques de synthèse comme des fibres d'aramide ou des fibres de poly(p-phénylène benzobisoxazole), plus connues sous le sigle PBO, ou encore des fibres de PAEK, ou encore de mélanges de telles fibres. De préférence, il s'agit de fibres de carbone ou de fibres de verre, et plus particulièrement de fibres de carbone.

Des exemples de matériaux composites sont : fibres de carbone dans une matrice PEKK, fibres de verre dans une matrice PEKK, fibres de carbone dans une matrice polyamide, par exemple de PA11, PA12, PA6 ou PA1010, fibres de verre dans une matrice polyamide, par exemple de PA11, P12, PA6 ou PA1010, fibres de carbone dans une matrice polypropylène, fibres de verre dans une matrice polypropylène, fibres de carbone dans une matrice polytéréphtalate d'éthylène, fibres de verre dans une matrice polytéréphtalate d'éthylène, fibres de carbone dans une matrice PEEK, fibres de verre dans une matrice PEEK, fibres de carbone dans une matrice PEI, fibres de verre dans une matrice PEI, fibres de carbone dans une matrice PPS, fibres de verre dans une matrice PPS.

Les pièces 2, 3 peuvent indépendamment comprendre de 25 à 80 % en volume, de préférence de 45 à 70 % en volume, de fibres de renfort, par exemple de fibres de carbone et/ou de fibres de verre, par rapport au volume total de la pièce. En particulier, les pièces 2, 3 peuvent indépendamment comprendre des fibres de renfort en une quantité de 25 à 30 % en volume, ou de 30 à 35 % en volume, ou de 35 à 40 % en volume, ou de 40 à 45 % en volume, ou de 45 à 50 % en volume, ou de 50 à 55 % en volume, ou de 55 à 60 % en volume, ou de 60 à 65 % en volume, ou de 65 à 70 % en volume, ou de 70 à 75 % en volume, ou de 75 à 80 % en volume, par rapport au volume total de la pièce. La dispersion de fibres de renfort à un taux volumique suffisant permet de rigidifier les pièces à souder, ou les couches les constituant.

Les pièces 2, 3 peuvent comprendre une quantité de matrice du matériau thermoplastique allant de 20 % à 75 % en volume, de préférence de 30 % à 55 % en volume, par rapport au volume total de la pièce. Dans des modes de réalisation, les pièces 2, 3 comprennent une quantité de matrice du matériau thermoplastique de 20 % à 25 % en volume, ou de 25 à 30 % en volume, ou de 30 % à 35 % en volume, ou de 35 à 40 % en volume, ou de 40 % à 45 % en volume, ou de 45 à 50 % en volume, ou de 50 % à 55 % en volume, ou de 55 à 60 % en volume, ou de 60 à 65 % en volume, ou de 65 à 70 % en volume, ou de 70 à 75 % en volume, par rapport au volume total de la pièce.

Dans certains modes de réalisation, les pièces 2, 3 peuvent indépendamment être constituées essentiellement, ou constituées, du matériau thermoplastique. Les pièces 2, 3 peuvent indépendamment être constituées d'un matériau dépourvu de tout élément renforçant, par exemple de fibres de renfort (notamment fibres de carbone et fibres de verre).

Par « *constituée essentiellement du matériau thermoplastique* », on entend que la pièce contient uniquement le matériau thermoplastique et éventuellement un ou des additifs fonctionnels ; la pièce peut notamment comprendre au moins 90 % en volume du matériau thermoplastique, de préférence au moins 95 %, ou au moins 98 %, ou au moins 99 %, par exemple approximativement 100 %.

Les pièces 2, 3 peuvent indépendamment être dépourvues de tout matériau conducteur électrique.

Les pièces 2, 3 peuvent également indépendamment comprendre de 0 à 30 % en volume de charges et/ou d'additifs fonctionnels, tels que décrits ci-dessus.

Les pièces 2, 3 peuvent indépendamment être des structures d'un seul bloc, ou alternativement, des structures multicouches.

Lorsque au moins l'une des pièces 2, 3 est une structure multicouche, les couches peuvent être différentes les unes des autres ou identiques.

Les caractéristiques mentionnées ci-dessus en rapport avec les pièces s'appliquent également aux couches de manière individuelle.

De préférence, la pièce 2, 3 comprend (ou consiste en) plusieurs couches composites (ou « semi-produits ») telles que décrites ci-dessus. La pièce 2, 3 peut être une pièce compactée ou une pièce déposée.

Le nombre de couches composites dans la pièce 2, 3 peut ainsi varier de 2 à 150, de préférence de 4 à 40, de préférence encore de 6 à 30, idéalement de 7 à 25.

Outre les pièces 2,3, aucune autre matière thermoplastique n'est ajoutée lors du procédé de soudage. En particulier, aucune autre matière thermoplastique n'est ajoutée à l'interface des surfaces à souder 10,11, que ce soit en amont ou en aval de l'insert 4. Le joint de soudure entre les deux pièces 2,3 soudées est donc formé par les matrices de matériau thermoplastique des pièces elles-mêmes, notamment par interpénétration.

Le produit de soudure présente une performance mécanique à l'assemblage satisfaisante. Cette performance mécanique à l'assemblage peut être évaluée par exemple par la mesure d'une contrainte de cisaillement à la rupture. Une contrainte de cisaillement à la rupture est une contrainte mécanique appliquée de manière parallèle à la surface du produit de soudure entrainant la ruine du matériau au niveau de l'interface soudée. Par exemple, selon une technique connue conformément aux normes prEN 6060 ou ISO4587, des rainures perpendiculaires à la direction de soudure peuvent être aménagées sur chacune des deux surfaces du produit de soudure, et localisent l'effort de cisaillement ainsi généré au niveau de l'interface soudée. La contrainte de cisaillement correspond à la force nécessaire à la rupture du produit de soudure ramenée à la surface travaillante.

De préférence, les fibres de renfort ont une orientation essentiellement unidirectionnelle dans chaque couche composite. De préférence encore, l'orientation unidirectionnelle des fibres de renfort diffère d'une couche à l'autre. De préférence encore, deux couches adjacentes présentent des orientations unidirectionnelles de fibres de renfort qui présentent essentiellement un angle d'environ 90° l'une par rapport à l'autre ; ou qui présentent essentiellement un angle d'environ 45° l'une par rapport à l'autre. Alternativement, les fibres de renfort dans au moins une des couches composites, et notamment dans chacune des couches composites, peuvent avoir plusieurs directions.

Le matériau thermoplastique peut être identique ou différent d'une couche à l'autre d'une pièce 2, 3 multicouche. De préférence, le matériau thermoplastique est de même nature (par exemple du PEKK ou du PEEK ou du PPS) dans l'ensemble des couches de la pièce 2, 3. Il peut éventuellement comporter un grade différent d'une couche à l'autre, par exemple une viscosité différente, un poids moléculaire différent ou une température de fusion différente. Alternativement, le grade du matériau thermoplastique est le même dans l'ensemble des couches.

Dans certains modes de réalisation, lorsqu'au moins l'une des pièces 2, 3 est une structure multicouche, la couche comportant la surface à souder 10, 11 (appelée aussi dans la présente description « *première couche »)* comprend un matériau thermoplastique ayant une température de fusion inférieure à la température de fusion du ou des matériaux thermoplastiques des autres couches de la pièce 2, 3. La température de fusion du matériau thermoplastique de la première couche peut être inférieure de 10 à 100°C, de préférence de 20 à 60°C, de préférence encore de 35 à 50°C, par rapport à la température de fusion du ou des matériaux thermoplastiques des autres couches de la pièce 2, 3.

La couche comportant la surface à souder 10, 11 peut également comprendre un matériau thermoplastique ayant une viscosité inférieure à celle du ou des matériaux thermoplastiques des autres couches de la pièce 2, 3.

A titre d'exemple, pour des matériaux thermoplastiques choisis parmi les polyéthercétonecétones (PEKK), la viscosité du matériau thermoplastique de la première couche peut être inférieure de 3 à 30 cm³/10mn, de préférence de 5 à 20 cm³/10mn, de préférence encore de 7 à 15 cm³/10mn, par rapport à la viscosité du ou des matériaux thermoplastiques des autres couches de la pièce 2, 3. Les viscosités indiquées sont des valeurs de viscosité à l'état fondu MVI (« *Melt Volume Index* ») ou MVR (« *Melt Volume Rate »)* mesurées selon la norme ISO/FDIS/1133_1 et ISO/FDIS/1133_2. La mesure est réalisée à 380°C, sous une masse de 1kg. Les produits sont séchés avant la mesure du MVI.

La couche comportant la surface à souder 10, 11 peut également comprendre une quantité volumique en matériau thermoplastique supérieure à celle des autres couches de la pièce 2, 3 ou une quantité volumique en fibres de renfort inférieure à celles des autres couches de la pièce 2, 3. La quantité volumique en matériau thermoplastique de la première couche peut varier de 30 à 100%, de préférence de 45 à 80 %, de préférence encore de 55 à 70 %, par rapport à la quantité volumique totale de ladite couche de la pièce 2, 3. La couche comportant la surface à souder, enrichie en résine par rapport aux autres couches de la pièce 2,3, est préférentiellement orientée à 0° par rapport à la direction de soudure.

Ainsi, les pièces 2, 3 peuvent par exemple présenter, dans leurs parties externes, un fort renforcement par des fibres, tout en conservant, au niveau des surfaces à souder, le taux de matériau thermoplastique nécessaire à un bon soudage.

La présence d'une couche comportant la surface à souder 10, 11 avec une viscosité plus faible et/ou une quantité volumique en matériau thermoplastique supérieure permet de faciliter le soudage et/ou de le rendre plus performant, et peut notamment permettre la formation d'un bourrelet (ou ménisque) de matériau thermoplastique à l'interface de soudage.

La couche comportant la surface à souder 10, 11 peut également comprendre un matériau de renfort à forte densité de croisement, tel qu'un tissé de carbone.

La couche comportant la surface à souder 10, 11 peut également comprendre, en tant que matériau thermoplastique, un mélange de deux ou plusieurs espèces thermoplastiques (par exemple un mélange d'un polyétherimide et d'un PAEK), les autres couches de la pièce 2, 3 ne comprenant en tant que matériau thermoplastique qu'une seule espèce thermoplastique.

Les pièces 2, 3 peuvent indépendamment avoir une épaisseur constante ou peuvent avoir une épaisseur qui varie, par exemple qui varie selon la direction de soudage D.

Un avantage du procédé de soudage par induction selon l'invention est qu'il est relativement peu sensible à la distance entre l'inducteur et les surfaces 10, 11 à souder des pièces 2, 3.

L'installation 1 comprend un support pour porter les pièces 2, 3 à souder (non montré sur la figure 1). Le support peut également maintenir les pièces 2, 3 pendant les opérations de soudage, par exemple par bridage. Ce support comporte de préférence une face plane destinée à porter les pièces 2, 3 mais peut également être de toute forme possible.

Avantageusement, particulièrement dans le cas de matériaux conducteurs thermiques comme un composite à renfort carbone, il peut être utile de préchauffer la zone à souder à une température qui doit rester inférieure à la température de fusion de tous les matériaux constitutifs des structures à souder, à l'aide de tout moyen approprié, il est aussi possible de chauffer le support. Par exemple, et particulièrement pour un PAEK, la température peut être inférieure de 40 à 150 °C, préférentiellement de 50 à 120 °C, très préférentiellement de 70 à 90 °C à la température de fusion. Le préchauffage permet de limiter la différence de température entre l'interface soudée et le reste des pièces 2,3 et limiter ainsi le flux thermique issu de l'interface vers les pièces 2,3. Le chauffage permet également de mieux contrôler la cristallisation des matériaux, notamment dans la zone de soudure. La chauffe peut être locale, à proximité et au droit des zones à souder.

Avantageusement, particulièrement dans le cas de matériaux conducteurs thermiques comme un composite à renfort carbone, il peut être également utile de maintenir le chauffage de la zone soudée à une température qui doit rester inférieure à la température de fusion de tous les matériaux constitutifs des structures à souder, à l'aide de tout moyen approprié, comme par exemple des lampes infrarouges ou un jet d'air chaud. Le maintien du chauffage permet également de mieux contrôler la température de l'interface soudée. Le chauffage permet également de mieux contrôler la cristallisation des matériaux, notamment dans la zone de soudure. La chauffe peut être locale, à proximité et au droit de la zone soudée.

L'installation 1 comprend un insert 4. L'insert 4 est un insert de chauffe, en ce qu'il est susceptible de fournir de la chaleur. La chaleur peut être fournie par tout moyen approprié, notamment par induction, par effet résistif, par vibration, par frottement, par ultrasons, par utilisation d'un laser, par un flux de gaz chaud ou par conduction à partir d'une source externe de chaleur. Selon la présente invention, la chaleur est fournie par induction.

Pour le soudage par induction selon l'invention, l'insert comprend un matériau comprenant un matériau sensible à l'induction, et la chaleur de l'insert est générée par la génération d'un champ magnétique par au moins un inducteur (5).

Par « *matériau sensible à l'induction* », on entend un matériau capable de chauffer lorsqu'il est soumis à un champ magnétique, au moins dans certaines conditions. Il peut s'agir en particulier d'un matériau suscepteur ou absorbeur de champ magnétique. De préférence, l'insert 4 comprend un matériau plus sensible à l'induction que les matériaux constituant les pièces 2, 3 (notamment les fibres de carbone le cas échéant).

De préférence, le matériau sensible à l'induction est un matériau métallique sensible à l'induction. Le matériau métallique peut être choisi par exemple parmi le groupe consistant en le fer, un acier (par exemple un acier inoxydable), l'aluminium, le nickel-chrome, le titane, ou une combinaison de ceux-ci.

L'insert 4 peut comprendre, en tant que matériau sensible à l'induction, ou être constitué de, un matériau ferromagnétique ayant une température de Curie Tc. Cela permet un meilleur contrôle de la température à laquelle l'insert 4 est chauffé lors de la mise en œuvre du procédé de soudage. En effet, lorsque la température du matériau ferromagnétique est inférieure à Tc, ce matériau a un comportement ferromagnétique et sera sensible à l'induction. Lorsque la température du matériau atteint la température de Curie Tc, le matériau devient paramagnétique et sa sensibilité à l'induction est modifiée, de sorte que la température dudit matériau peut être maintenue à la température Tc.

L'insert 4, notamment lorsqu'il comprend un matériau ferromagnétique en tant que matériau sensible à l'induction, peut être recouvert, en totalité ou en partie, d'un revêtement fonctionnel apportant par exemple la propriété d'anti-corrosion (matériau anti-corrosion) ou facilitant le glissement de l'insert entre les deux pièces (matériau facilitant le glissement de l'insert 4 entre les pièces 2, 3).

Pour un soudage par effet résistif (pas selon l'invention), l'insert 4 comprend un matériau conducteur électrique, et la chaleur de l'insert est générée par effet résistif (ou effet Joule). L'effet résistif est généré par application d'un courant électrique. L'insert peut être recouvert éventuellement, en totalité ou en partie, d'un matériau isolant.

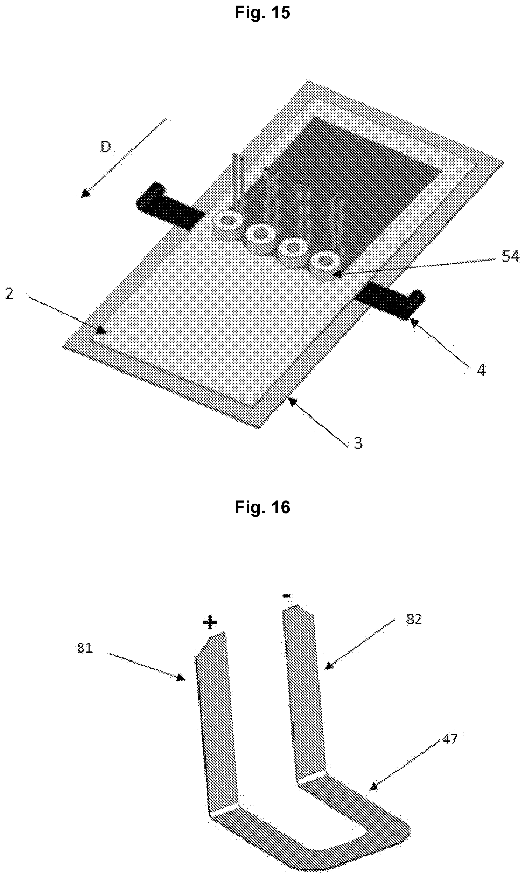

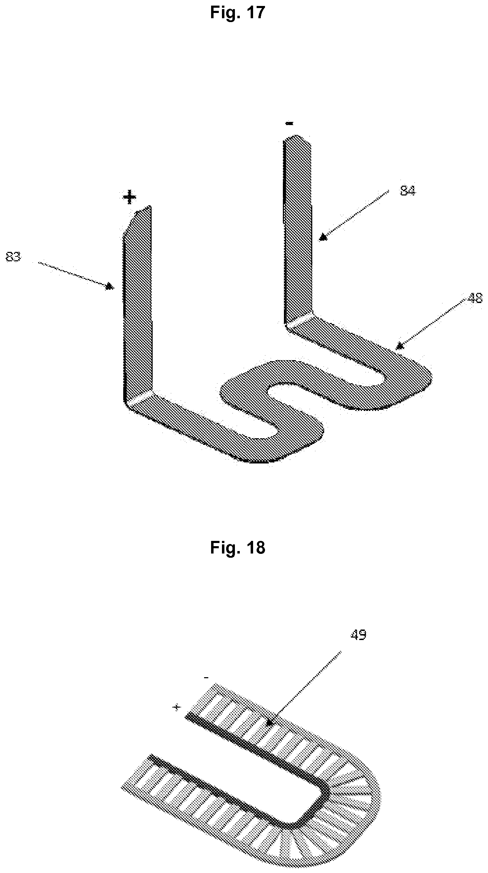

L'insert 4 peut avoir une forme adaptée à la chauffe par effet résistif. Un insert 47 en forme de « U » situé à l'extrémité de deux bras 81 et 82 est illustré sur la figure 16. Un insert 48 situé à l'extrémité de deux bras 83 et 84 est illustré sur la figure 17.

Le matériau conducteur résistif peut être choisi parmi les alliages de nickel, les alliages de plomb, les alliages de titane, les alliages de manganèse, les alliages nickel-chrome, les alliages fer-chrome-aluminium et les alliages nickel-cuivre.

L'insert 4 peut comprendre différentes zones comprenant des matériaux différents, afin de localiser la zone de chauffe au niveau des surfaces à souder. Ces matériaux peuvent être assemblés par exemple par brasage. De même, comme illustré à la figure 18, l'insert peut par exemple comprendre une série de zones résistives 49 montées en parallèle afin d'homogénéiser la température le long de l'insert.

Pour un soudage par utilisation de laser (pas selon l'invention), l'insert 4 peut être chauffé directement par au moins un laser. Alternativement, l'insert 4 peut comprendre un réseau de fibres optiques permettant de diriger l'énergie de chauffage laser vers les surfaces à souder.

Pour un soudage par un flux de gaz chaud (pas selon l'invention), l'insert 4 peut être chauffé directement par le flux de gaz chaud, par exemple par contact. Alternativement, l'insert 4 peut comprendre au moins une canalisation permettant la circulation du flux de gaz chaud dans l'insert.

Pour un soudage par conduction (pas selon l'invention), l'insert 4 peut être chauffé par toute source externe de chaleur adaptée.

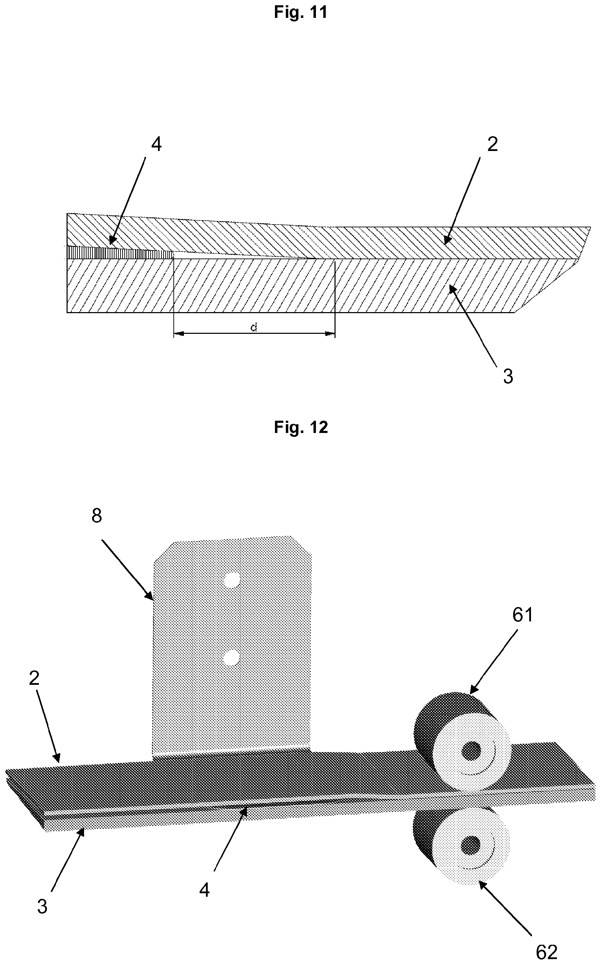

L'insert 4 est avantageusement une plaque. L'insert 4 a une épaisseur de 5 mm ou moins, préférentiellement de 0,3 à 5 mm ; très préférentiellement de 0,3 à 3 mm, plus préférentiellement de 0,5 à 1,5 mm, encore plus préférentiellement de 0,5 à 1 mm. Selon des modes de réalisation, l'insert 4 a une épaisseur de 0,1 ou moins, ou de 0,1 à 0,2 mm, ou de 0,2 à 0,3 mm, ou de 0,3 à 0,5 mm, ou de 0,5 à 1 mm, ou de 1 à 1,5 mm, ou de 1,5 à 2 mm, ou de 2 à 2,5 mm, ou de 2,5 à 3 mm, ou de 3 à 3,5 mm, ou de 3,5 à 4 mm, ou de 4 à 4,5 mm, ou de 4,5 à 5 mm. Par « épaisseur », on entend la dimension entre les surfaces de l'insert 4 en contact avec les surfaces à souder. Si les surfaces de l'insert 4 ne sont pas planes et parallèles entre elles, l'épaisseur correspond à la dimension maximale entre ces deux surfaces. De telles épaisseurs assurent la rigidité de l'insert, un bon transfert thermique et une faible déformation mécanique des pièces rigides 2, 3 lors du passage de l'insert 4 et rend possible le soudage de pièces rigides. En effet, pour que la soudure entre les deux pièces à souder soit effective, la température des surfaces à souder, formant l'interface de soudage, doit être supérieure à la température de fusion du polymère thermoplastique au moment de mise en pression de la zone à souder par le ou les rouleaux de compactage 6. Comme illustré sur la figure 11, il est préférable de limiter la distance « d » entre l'extrémité de l'insert 4 et le point de contact des surfaces à souder des pièces 2, 3. Cela implique de limiter l'épaisseur de l'insert 4 de manière à ne pas contraindre une ou les pièces à souder 2, 3 au-delà de leur limite élastique. Ainsi, l'épaisseur de l'insert 4 doit être miniaturisée, adaptée et optimisée en fonction en prenant en compte la rigidité des pièces à souder 2, 3, et avoir typiquement une épaisseur de 5 mm ou moins.

L'insert 4 peut avoir des dimensions (par exemple une longueur, une largeur, une épaisseur), une forme et/ou des propriétés (par exemple effet ressort) adaptées aux pièces à souder et au procédé de soudage (par exemple la vitesse de déplacement).

L'insert 4 peut avoir une largeur (perpendiculairement à la direction de soudure) au moins égale à la largeur de la zone de recouvrement des pièces à souder 2, 3.

Alternativement, l'insert 4 peut avoir une largeur inférieure à la largeur de la zone de recouvrement des pièces à souder 2, 3, formant ainsi une soudure uniquement sur une partie de la largeur de la zone de recouvrement. L'insert 4 peut être de forme plane, c'est-à-dire que chacune de ses deux surfaces sont planes. Les surfaces planes peuvent être parallèles entre elles (angle nul). Afin d'optimiser la chauffe des surfaces à souder au contact de l'insert 4, les surfaces de l'insert 4 peuvent former un angle non nul, présentant une forme de biseau, par exemple un insert ayant un biseau plan ou un insert ayant un biseau non-plan. Les surfaces de l'insert peuvent présenter des géométries spécifiques et adaptées au profil des pièces 2, 3 à souder. L'insert peut être de forme optimisée permettant de favoriser le transfert de chaleur par contact avec les substrats, comme illustré à la figure 11. Par exemple, la géométrie du suscepteur peut être conçue afin de pouvoir s'adapter à des distances entre substrats variables.

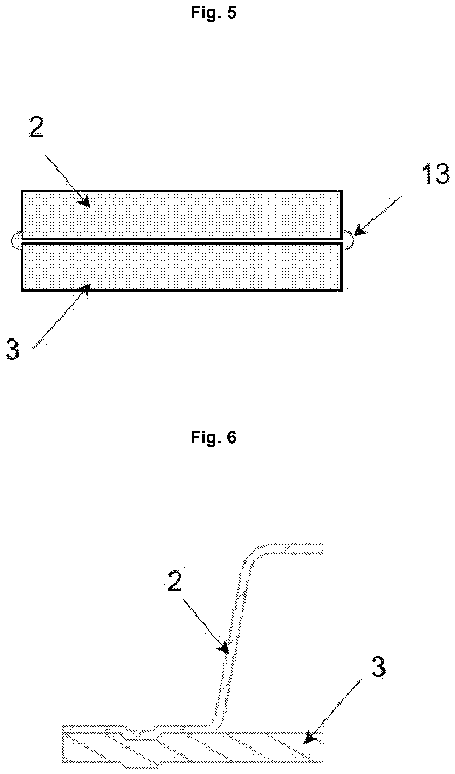

Dans d'autres modes de réalisation, l'insert 4 peut avoir toute autre forme adaptée, en particulier une forme non plane. L'utilisation d'un tel insert, avec une géométrie particulière, permet de souder des pièces ayant des surfaces à souder 10, 11 non planes. Un exemple est illustré sur la figure 6. L'insert 4 est situé à l'extrémité d'un bras 8, et est de préférence fixé de manière solidaire au bras 8.

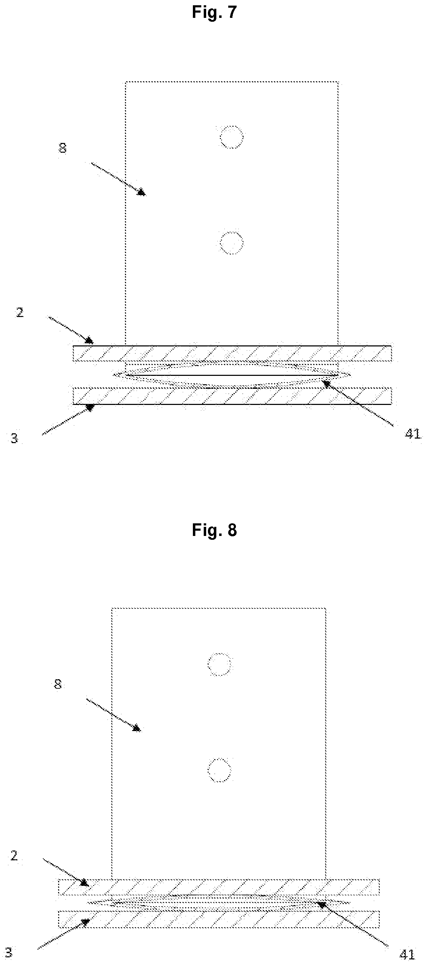

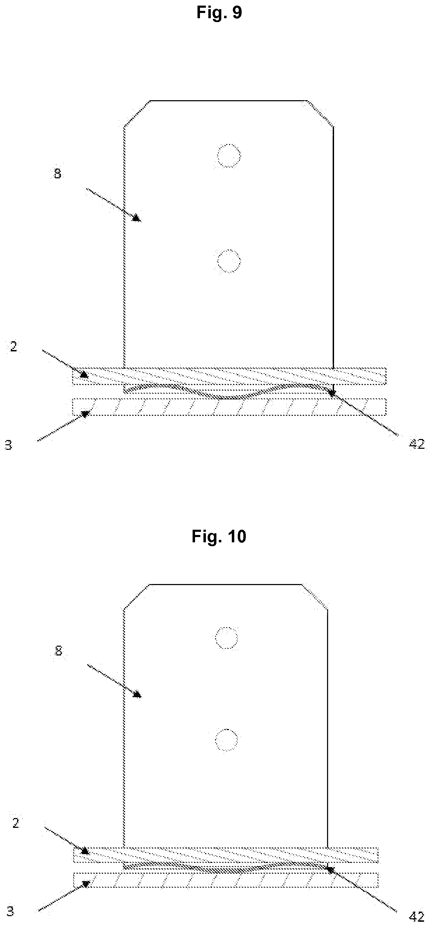

Un insert 41 « à effet ressort » est illustré sur les figures 7 et 8 dans deux états de compression différents. Un autre insert 42 « à effet ressort » est illustré sur les figures 9 et 10 dans deux états de compression différents. En effet, les surfaces à souder peuvent présenter un espacement avant soudage variable en raison des tolérances de fabrication des pièces 2,3.

Le procédé de soudage par induction selon l'invention comprend l'insertion de l'insert 4 entre les surfaces 10, 11 à souder des deux pièces 2, 3. Lors du soudage, l'insert 4 se déplace par rapport aux pièces à souder 2, 3, selon une direction de soudage D.

Ce déplacement relatif peut être effectué en déplaçant les pièces à souder 2, 3, l'insert 4 restant fixe par rapport au support. Alternativement et de préférence, il peut être effectué en déplaçant l'insert 4 par rapport au support, les pièces à souder 2, 3 restant fixes par rapport au support.

L'insert 4 peut par exemple se déplacer par rapport aux pièces à souder 2, 3, selon une direction de soudage D, à une vitesse de 50 à 1000 mm/min, de préférence de 100 à 500 mm/min.

Lors du déplacement relatif de l'insert 4 par rapport aux pièces à souder 2, 3, selon une direction de soudage D, la trajectoire de l'insert (et des pièces à souder) peut être rectiligne. Alternativement, notamment lorsque la largeur de l'insert est inférieure à la largeur de la zone de recouvrement des pièces à souder 2, 3, la trajectoire de l'insert peut ne pas être rectiligne. Par exemple, l'insert peut se déplacer également de manière transversale, de manière sinusoïdale ou incrémentale ou autre.

Pour le soudage par induction selon l'invention, l'installation 1 comprend également au moins un inducteur 5. Lors de la mise en œuvre du procédé de soudage par induction selon l'invention, l'inducteur 5 génère un champ magnétique. L'inducteur 5 présente une géométrie optimisée par rapport au champ magnétique à mettre en oeuvre ; il peut être constitué ou non de spires. Dans le cas où sa géométrie présente des spires, il peut être un inducteur à simple spire ou à plusieurs spires, ces spires pouvant être désaxées et / ou orientées en fonction des matériaux à souder.

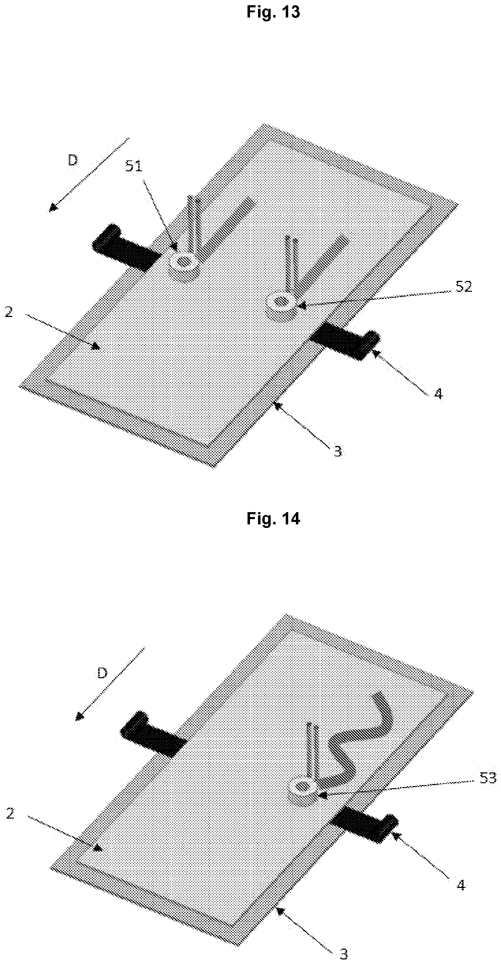

Dans un mode de réalisation, comme illustré aux figures 1, 2, 3, 13 et 15, l'installation peut comprendre un seul inducteur 5, 53. Dans un autre mode de réalisation, comme illustré à la figure 13, l'installation peut comprendre au moins deux inducteurs 51 et 52, formant des zones de soudage distinctes. Dans un autre mode de réalisation, comme illustré à la figure 15, l'installation peut comprendre une série d'au moins deux inducteurs, par exemple une série de quatre inducteurs 54, permettant un soudage surfacique des deux pièces à souder 2,3.

L'inducteur 5 peut être fixe par rapport aux pièces 2, 3. L'inducteur 5 peut ainsi être de grande dimension pour permettre de chauffer l'insert 4 au cours de son déplacement ; on peut également prévoir une pluralité d'inducteurs 5 fixes le long de la direction de soudage D. Mais de préférence, l'inducteur est mobile par rapport aux pièces 2, 3.

Lors du déplacement relatif de l'insert 4 par rapport aux pièces à souder 2,3 selon une direction de soudage D, la trajectoire de l'inducteur peut être rectiligne ou peut ne pas être rectiligne. Comme illustré à la figure 13, les inducteurs 51 et 52 peuvent avoir une trajectoire rectiligne. Comme illustré à la figure 15, la série d'inducteurs 54 peut avoir également une trajectoire rectiligne. Comme illustré à la figure 14, l'inducteur 53 peut avoir une trajectoire sinusoïdale.

De manière avantageuse, lors de la mise en œuvre du procédé de soudage selon l'invention, l'insert 4 et l'inducteur 5 se déplacent conjointement par rapport aux pièces à souder 2, 3 lors du soudage, selon la direction de soudage D.

Par l'expression « se *déplacer conjointement* », on entend se déplacer en même temps, dans la même direction (ici la direction de soudage D) et à la même vitesse.

De préférence, le bras 8 qui comporte à son extrémité l'insert 4 est solidaire de l'inducteur 5.

Le procédé de soudage selon l'invention peut comprendre une étape de mise en contact des surfaces à souder 10, 11 des deux pièces à souder 2, 3 par application d'une pression sur au moins une des deux pièces 2, 3 en amont de (c'est-à-dire devant) et/ou en aval de (c'est-à-dire derrière) la position de l'insert 4 par rapport à la direction du soudage D.

Ainsi, l'installation 1 peut également comprendre un ou plusieurs éléments d'application de pression. Ces éléments d'application de pression peuvent être positionnés derrière et/ou devant l'insert par rapport à la direction du soudage D. Les éléments d'application de pression permettent d'appliquer une pression sur les pièces 2, 3 de sorte que celles-ci soient pressées l'une contre l'autre. De préférence, lorsque l'installation 1 comprend plusieurs éléments d'application de pression, les pressions appliquées par chacun de ces éléments d'application de pression sont indépendantes les unes des autres.

Il peut par exemple s'agir d'un ou de plusieurs rouleaux de compactage 6, positionnés derrière l'insert par rapport à la direction du soudage D. Le ou les rouleaux de compactage 6 permettent de favoriser l'interpénétration des matériaux ramollis par la température de l'insert 4. Il peut aussi s'agir de plusieurs rouleaux de compactage 6 entourés optionnellement d'une chenille 16, ce qui permet d'assurer un certain temps de maintien de la pression de compactage. Dans ces modes de réalisation, chacun des rouleaux de compactage 6 peut exercer une pression et/ou présenter une cinématique de manière couplée entre les rouleaux ou bien de manière indépendante d'un rouleau à l'autre. Les éléments d'application de pression peuvent comporter des moyens de refroidissement. Ils peuvent également être indépendamment animés d'une vibration à une fréquence adaptée, par exemple ultrasonique, pour permettre de faciliter le soudage en favorisant l'interpénétration et la diffusion macromoléculaire des matériaux ramollis par la température de l'insert 4. Les vibrations peuvent être induites par un vibreur 12. Lorsque le dispositif comprend au moins deux rouleaux de compactage, ceux-ci peuvent avoir des diamètres identiques ou différents. Ces rouleaux peuvent comprendre également une chenille d'appui. Comme illustré à la figure 12 (inducteur non représenté), deux rouleaux de compactage 61 et 62 fixes peuvent être positionnés de part et d'autre des pièces 2,3 mobiles, et placés en vis-à-vis l'un de l'autre.

Les éléments d'application de pression peuvent également consister en un ou plusieurs rouleaux de plaquage, positionnés devant l'insert par rapport à la direction du soudage D. Ce ou ces rouleaux permettent d'assurer un plaquage suffisant des pièces 2, 3. Le positionnement d'éléments d'application de pression devant l'insert est particulièrement utile, car le déplacement de l'insert entre les pièces 2,3 entraîne l'écartement des deux pièces l'une par rapport à l'autre, et peut réduire les surfaces de contact avec l'insert, et réduire l'efficacité du soudage.

De préférence, les éléments d'application de pression, par exemple le ou les rouleaux de compactage 6, les rouleaux de compactage entourés d'une chenille 16 et/ou le ou les rouleaux de plaquage, peuvent indépendamment se déplacer conjointement au déplacement de l'insert 4, par rapport aux pièces à souder 2, 3, lors du soudage, selon la direction de soudage D. Dans le soudage par induction, ils peuvent indépendamment être solidaires de l'inducteur 5. Ils peuvent indépendamment être solidaires du bras 8 qui comporte l'insert 4.

Le procédé de soudage selon l'invention peut comprendre une étape de refroidissement des pièces soudées par application d'un bloc de régulation thermique (non représenté) sur au moins une des deux pièces 2, 3 derrière la position de l'insert 4 par rapport à la direction du soudage D, et devant le ou les éléments d'application de pression, si présent.

Le bloc de régulation thermique permet de réduire la température des surfaces libres de la pièce soudée par rapport à la température de soudure, tout en maintenant les surfaces à souder, et donc de l'interface de soudage, à une température supérieure à la température de fusion du polymère thermoplastique.

Cette étape de refroidissement permet de maîtriser le gradient de température au sein de la pièce soudée, et limite, voire empêche, le décompactage.

Le bloc de régulation thermique est constitué par un matériau présentant une conductivité thermique adaptée et peut être régulé en température par exemple par une circulation de fluide. Dans le cas du chauffage de l'insert par induction, le matériau constitutif du bloc de régulation thermique peut avantageusement être conducteur thermique et isolant électrique.

L'installation 1 peut également comprendre une enceinte à température contrôlée 14. Cette enceinte 14 est positionnée de préférence derrière l'insert par rapport à la direction du soudage D. Une enceinte peut également ou alternativement être positionnée devant l'insert par rapport à la direction du soudage D. De manière avantageuse, elle peut se déplacer conjointement au déplacement de l'insert 4, par rapport aux pièces à souder 2, 3, lors du soudage, selon la direction de soudage D. Dans des modes de réalisation, l'enceinte 14 est solidaire du bras 8 qui comporte l'insert 4. Dans le soudage par induction l'enceinte 14 est également ou alternativement être solidaire du bras 8 qui comporte l'inducteur 5. Cette enceinte à température contrôlée 14 permet de maintenir une zone des pièces 2, 3 à une température spécifique, par exemple de maintenir une zone des pièces 2, 3 ayant été ramollie par la chauffe - par exemple par induction - à une température de recristallisation afin de permettre une recristallisation dans des conditions optimales et d'éviter une post-cuisson des pièces après soudage. Elle peut également permettre le refroidissement extérieur des pièces en dehors de la zone de soudage (et en particulier en dehors de l'enceinte). De plus, lorsque le chauffage des surfaces à souder 10, 11 est réalisé par convection, la présence d'une telle enceinte 14 peut permettre de limiter la perturbation des flux de convection.

L'enceinte à température contrôlée 14 peut être amenée à la température désirée par l'insufflation d'un fluide à l'intérieur de l'enceinte 14, de préférence de l'air chaud, à l'aide d'au moins un tuyau de soufflage 15.

La zone située à l'extérieur de l'enceinte à température contrôlée 14 peut être portée à une autre température, et par exemple peut être refroidie, notamment par insufflation d'un fluide, de préférence de l'air froid, à l'aide d'au moins un tuyau de soufflage.

L'enceinte à température contrôlée 14 peut être délimitée au moyen d'une jupe souple, par exemple en matériau élastomère. La jupe souple peut par exemple être fixée à la périphérie d'une plaque supérieure. Cette configuration permet de maintenir une enceinte essentiellement fermée malgré d'éventuelles variations de hauteur de la plaque supérieure par rapport aux pièces 2, 3 et notamment de s'adapter à des pièces 2, 3 de toutes formes.

L'installation 1 peut également comprendre un deuxième bras 9 comportant à son extrémité un élément écarteur 7, éventuellement solidaire de l'insert (4). L'élément écarteur 7 est inséré entre les surfaces 10, 11 à souder des pièces 2, 3. Il permet notamment de limiter le frottement entre l'insert 4 et les pièces 2, 3.

L'élément écarteur 7 est préférentiellement positionné devant l'insert 4 par rapport à la direction du soudage D. Lors du soudage, il peut avantageusement se déplacer conjointement au déplacement de l'insert 4, par rapport aux pièces à souder 2, 3, entre les surfaces 10, 11 à souder selon la direction de soudage D. Le bras 9 comportant l'élément écarteur 7 peut être solidaire du bras 8 qui comporte l'insert 4. Dans le soudage par induction, le bras 9 comportant l'élément écarteur 7 peut également ou alternativement être solidaire du bras 8 qui comporte l'inducteur 5.

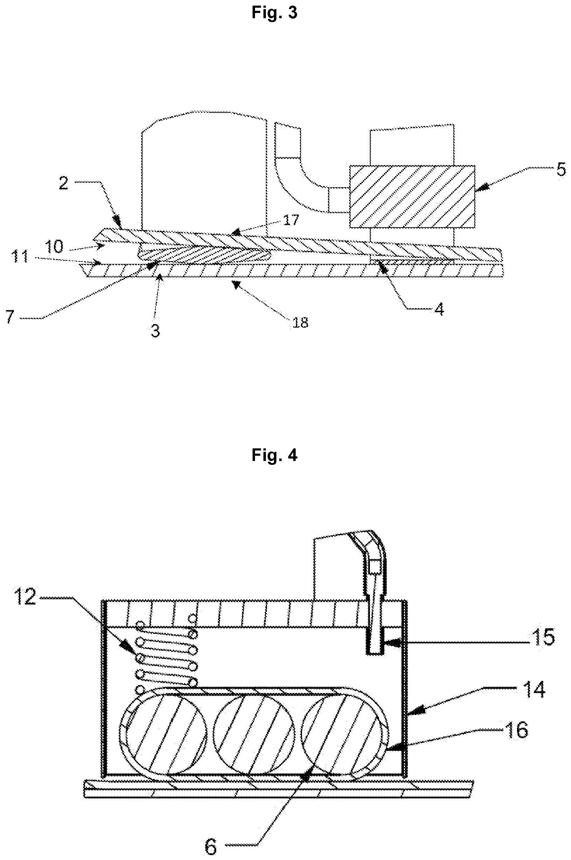

L'élément écarteur peut être de forme double convexe (visible sur la figure 3), en ce que chacune de ses surfaces sont convexes.

L'élément écarteur peut être également de forme mixte, en ce qu'une surface est convexe et l'autre surface est plane.

Lorsque le procédé de soudage selon l'invention est mis en œuvre, l'insert 4 peut être en contact avec chacune des surfaces 10, 11 à souder des deux pièces 2, 3. Alternativement, l'insert peut ne pas être en contact avec au moins une des surfaces 10, 11 à souder des deux pièces 2, 3, en particulier il peut n'être en contact avec aucune des surfaces 10, 11 à souder des deux pièces 2, 3.

Le chauffage des surfaces 10, 11 à souder peut ainsi être effectué par conduction et/ou par convection et/ou par rayonnement à partir de l'insert 4.

L'installation 1 peut également comprendre au moins un pyromètre (non représenté). Lors de la mise en œuvre du procédé de soudage selon l'invention, le pyromètre mesure de manière continue ou ponctuelle la température des pièces à souder au niveau de la zone de soudure. Le pyromètre est préférentiellement positionné au niveau de l'insert 4 par rapport à la direction de soudage D.

Le pyromètre est préférentiellement positionné sur un des bords des pièces à souder 2, 3 ou alternativement un pyromètre est situé sur chacun des bords des pièces à souder 2, 3, notamment lorsque l'insert à une largeur au moins égale à la largeur de la zone de recouvrement des pièces à souder 2, 3. En effet, le procédé selon l'invention permet une mise en température contrôlée et homogène des pièces à souder 2, 3 au niveau de la zone de soudure. La mesure de la température au niveau de l'un des bords, ou des deux bords, est suffisante et permet d'extrapoler la température sur l'ensemble de la zone de soudure.

Alternativement, ou additionnellement, un pyromètre peut être positionné au niveau de la surface libre de l'une des deux pièces en tout point de la zone de soudure, notamment si la largeur de l'insert ne représente qu'une portion de la largeur de la zone de recouvrement des pièces à souder 2, 3.

Le pyromètre peut aussi mesurer la température de l'insert 4 au bord des pièces à souder.

Préférentiellement, l'insert 4 et le pyromètre se déplacent conjointement par rapport aux pièces à souder 2, 3, lors du soudage, selon la direction de soudage D. Il peut être solidaire du bras 8 qui comporte l'insert 4.

L'installation peut comprendre un dispositif multi-soudage.

Dans un mode de réalisation, un dispositif multi-soudage peut permettre le soudage simultané d'au moins trois pièces à souder. Un tel dispositif peut comprendre notamment au moins deux inserts, positionnés au même niveau ou en décalé par rapport à la direction de soudure. Ces multiples inserts permettent respectivement la soudure de la première pièce et de la deuxième pièce, la soudure de deuxième pièce et de la troisième pièce, etc. et leur juxtaposition. Dans un autre mode de réalisation, un dispositif multi-soudage peut permettre le soudage de deux pièces au niveau de deux parties distinctes et ponctuelles de la zone de recouvrement. Un tel dispositif peut comprendre notamment au moins deux inserts, positionnés au même niveau par rapport à la direction de soudure et avec un certain écartement entre eux. Chaque insert permet la soudure d'une partie d'une première pièce et d'une seconde pièce. Après soudage, seules certaines parties de la zone de recouvrement des deux pièces seront soudées entre elles, les autres parties n'étant pas soudées. Dans le soudage par induction, le même résultat peut être obtenu en positionnant un insert large sur toute la surface des deux pièces à souder et en appliquant le chauffage via plusieurs inducteurs apportant un chauffage localisé qui se déplacent au-dessus de la pièce à souder.

Le procédé de soudage selon l'invention peut comprendre la formation d'un bourrelet (ménisque) 13 de matériau thermoplastique à l'extrémité de l'interface de soudage (visible sur la figure 5). La formation de ce bourrelet (ménisque) est rendue possible car le procédé selon l'invention permet le chauffage des surfaces 10, 11 à souder, et donc le ramollissement du matériau thermoplastique des pièces 2, 3 jusqu'à l'extrémité de ces surfaces 10, 11 à souder (notamment en adaptant les dimensions de l'insert 4 par rapport aux surfaces 10, 11 à souder, l'insert 4 pouvant ainsi s'étendre jusqu'à une ou des extrémités des surfaces 10, 11 à souder, voire pouvant dépasser une ou des extrémités des surfaces 10, 11 à souder). La présence d'un bourrelet (ménisque) 13, à l'extrémité de l'interface de soudage permet de limiter les risques de création d'amorce de rupture. Dans le cas d'un procédé de soudage par induction basé sur le chauffage des fibres de carbone des pièces composites à souder, la création de boucles de courant à proximité des extrémités de l'interface de soudage n'est pas possible, ce qui résulte généralement en des soudures de plus faible résistance mécanique à ces endroits.

Dans certains modes de réalisation, la pièce 3 la plus éloignée de l'inducteur 5 est une structure multicouche qui présente un élément conducteur en tant que couche externe ou en tant que partie de la couche externe (c'est-à-dire la couche la plus éloignée de la surface 11 à souder). L'élément conducteur peut notamment être une grille métallique, par exemple en cuivre ou en bronze. La présence de cet élément conducteur est particulièrement avantageuse pour la fabrication de fuselage dans le domaine de l'aéronautique, cet élément permettant de protéger les avions contre la foudre. Le procédé selon l'invention présente l'avantage de pouvoir utiliser une chauffe localisée à l'interface entre les deux pièces à souder. Par exemple, dans le cas du chauffage par induction, il est possible de souder les pièces 2, 3 sans que le champ magnétique atteignant l'élément conducteur soit suffisant pour induire un chauffage important de cet élément, ce qui permet d'éviter une dégradation locale de la pièce par surchauffe au niveau de cet élément conducteur. De plus, le procédé selon l'invention évite que l'élément conducteur ne capte une grande partie de l'effet du champ magnétique, ce qui résulterait en une chauffe insuffisante au niveau des surfaces à souder.

Les déplacements de l'insert 4 et/ou de l'inducteur 5 (pour le soudage par induction) et/ou des éléments d'application de pression et/ou de l'enceinte à température contrôlée 14 et/ou de l'élément écarteur 7 peuvent être réalisés de manière automatisée, par un ou plusieurs robots, ou bien manuellement par un opérateur. En particulier, pour le soudage par induction, l'insert 4 et l'inducteur 5 peuvent être déplacés conjointement par un même robot.

La température de soudage est fonction de la température de l'insert 4.

Dans le cas de l'induction, la température de l'insert 4 dépend elle-même de la puissance et de la fréquence du champ magnétique délivrés par l'inducteur 5, de la vitesse de déplacement de l'insert 4 (par exemple conjointement à l'inducteur 5) et de la distance entre l'inducteur 5 et l'insert 4.

Dans certains modes de réalisation, l'inducteur 5 génère un champ magnétique ayant une fréquence de 10 Hz à 2 MHz, de préférence de 80 Hz à 300 kHz, de préférence de 100 Hz à 200 kHz.

Dans certains modes de réalisation du soudage par induction, la distance entre l'inducteur 5 et l'insert 4 reste constante au cours du soudage. Dans d'autres modes de réalisation, cette distance peut varier, notamment si l'une au moins des pièces 2, 3 à souder est d'épaisseur variable.

Dans certains modes de réalisation, le procédé selon l'invention comprend une étape de contrôle de la température de l'insert 4 (au moyen d'un thermocouple ou de tout autre capteur de température approprié) et une étape de régulation instantanée de cette température, notamment par un ajustement de la vitesse de déplacement de l'insert 4, et/ou de la puissance du champ magnétique délivré par l'inducteur 5 ou la puissance électrique dans le cas d'une chauffe résistive, et/ou de tout autre paramètre pertinent, par exemple par une boucle de rétroaction conventionnelle.

La régulation thermique de l'insert à l'avantage de permettre de porter les surfaces à souder à une température nécessaire et adaptée à l'assemblage par soudage. Plusieurs modes de régulation peuvent être mis en œuvre.

Par exemple, un mode de régulation peut consister en une régulation thermique par mesure de température de l'insert 4 à l'aide d'un dispositif de type pyromètre laser. Ainsi, après avoir préalablement quantifié l'écart de température entre la zone de contrôle accessible durant le soudage (bord de l'insert 4, à proximité des pièces 2,3) et les surfaces de l'insert 4 au contact des surfaces à souder (inaccessible durant la phase de soudage), la puissance du dispositif de chauffe comme le générateur d'induction dans le cas d'une chauffe par champ magnétique ou le générateur de courant dans le cas d'une chauffe résistive peut être asservie à la température de l'insert 4 accessible durant la phase de soudage classique.

Un autre mode de régulation, pour le procédé de soudage par induction, peut être d'utiliser un matériau présentant une température de Curie, pour fabriquer l'insert 4. Le point de Curie d'un matériau modifie significativement sa sensibilité à un champ magnétique et aux phénomènes d'induction. Dans ce mode, deux configurations peuvent notamment être utilisées. Une configuration est la capacité du matériau à ne plus être chauffé par induction au-delà de ce point singulier (arrêt des phénomènes de courant induit et de dipôles magnétiques). Dans ce cas, la régulation thermique de l'insert est physiquement assurée dès le passage du point de Curie. Toutefois, si la chauffe par induction intervient encore au-delà de ce point (ex : courant induit persistant), le changement significatif de la sensibilité au champ magnétique du matériau au niveau du point de Curie (ex : perméabilité magnétique) peut être détecté par un capteur adapté et placé dans l'environnement du dispositif de soudage ; ce capteur permet ainsi de remarquer l'atteinte du point de Curie et d'initier une régulation électronique de la chauffe en assurant l'asservissement de la puissance du générateur. Le paramètre détecté dans l'environnement du dispositif de soudage peut être l'intensité du champ magnétique environnant (ex : capteur effet Hall), affecté par les changements brusques des caractéristiques du matériau de l'insert 4 aux phénomènes magnétiques. La détection d'un paramètre de l'environnement pourrait aussi consister en une variation de l'impédance de l'insert 4 couplé à l'inducteur.

De tels modes de réalisations sont particulièrement avantageux pour l'assemblage de pièces de fuselage dans le domaine de l'aéronautique car le contrôle de la température de soudage est nécessaire pour la qualification d'un procédé aéronautique.

Un mode de régulation, pour un procédé de soudage par effet résistif (pas selon l'invention), peut être la mesure de la résistivité de l'insert. La mesure de la résistivité, dépendante de la température, permettra d'asservir la valeur du courant traversant l'insert 4.

Le procédé selon l'invention peut également comprendre une étape d'enregistrement des valeurs de la température de l'insert 4 et/ou de la vitesse de déplacement de l'insert 4, et/ou de la puissance magnétique délivrée par l'inducteur 5, et/ou de la pression appliquée aux pièces 2, 3 à souder, et/ou de tout autre paramètre. Cela est particulièrement avantageux pour la fabrication de fuselage dans le domaine de l'aéronautique où l'enregistrement de ces données est nécessaire pour la qualification d'un procédé aéronautique.

Les pièces 2, 3 soudées selon l'invention peuvent être en particulier des pièces de fuselage d'avion, telles que notamment des pièces de peau de fuselage, de cadres ou de lisses.

Alternativement, ces pièces peuvent être des pièces d'équipements spatiaux, ou automobiles, ou d'équipements sportifs.

Le procédé de l'invention peut également être appliqué au soudage de bâches, structurelles ou non, notamment dans le domaine du génie civil et du nautisme (bâche de mouillage, voile de voilier...).

### Exemples

Les exemples suivants illustrent l'invention sans la limiter.

Dans les exemples 1 à 4, lors de la fabrication de l'une au moins des pièces à souder par la technologie d'ATL (Automated Tape Lay-up), la première couche de dépose est réalisée avec une Tape UD dont la composition est différente de celle des autres couches composant la pièce composite.

### Exemple 1

La première couche a comme composition 50 % en masse de PEKK Kepstan^{®} 7002 et 50 % en masse de fibres de carbone. Les autres couches ont comme composition 34 % en masse de PEKK Kepstan^{®} 7002 (commercialisé par la société Arkema) et 66 % en masse de fibres de carbone.

Dans cet exemple, le taux plus élevé de matériau thermoplastique dans la première couche permet de faciliter le soudage sans changer le procédé de réalisation des pièces, et permet d'obtenir un fluage de cette première couche sous la pression de compactage permettant d'obtenir un ménisque à l'extrémité de l'interface de soudage. De plus, une telle première couche permet de compenser certains défauts des surfaces à souder.

### Exemple 2

La première couche a comme composition 34 % en masse de PEKK Kepstan^{®} 6002 (ayant une température de fusion de 303°C) et 66 % en masse de fibres de carbone. Les autres couches ont comme composition 34 % en masse de PEKK Kepstan^{®} 7002 (commercialisé par la société Arkema) (ayant une température de fusion de 333°C) et 66 % en masse de fibres de carbone.

On peut alors adapter les paramètres du procédé pour que la température de l'insert permette de fondre le matériau thermoplastique de la première couche sans fondre celui des autres couches.

Alternativement, le matériau constitutif de l'insert comprend un matériau ferromagnétique dont le point de Curie est tel que la température « plafond » de l'insert (et de son environnement dans le procédé) garantisse la fusion de la première couche uniquement.

### Exemple 3

La première couche de la pièce a comme composition 50 % en masse de polyamide et 50 % en masse de fibres de verre. Les autres couches ont comme composition 34 % en masse de polyamide et 66 % en masse de fibres de verre.

### Exemple 4

La première couche a comme composition 34 % en masse d'un premier polyamide ayant une certaine température de fusion et 66 % en masse de fibres de verre. Les autres couches ont comme composition 34 % en masse d'un deuxième polyamide ayant une température de fusion plus élevée que celle du premier polyamide et 66 % en masse de fibres de verre.

### Exemple 5

Dans ces premiers essais de validation de la faisabilité, un clinquant d'une épaisseur de 0,8 mm est utilisé en tant qu'insert. Les substrats à souder se composent d'une matrice de PPS comprenant un tissé de carbone et ont une épaisseur de 1,5 mm. Un pli sous forme de tissé de verre dans une matrice PPS est présent au niveau de l'interface à souder, afin d'introduire un matériau non conducteur à l'interface.

La soudure est réalisée selon le procédé de l'invention. Le soudage est effectif et on observe que l'assemblage ainsi réalisé est cohésif.

Cet exemple permet de vérifier que la soudure selon l'invention est bien obtenue grâce au chauffage de l'insert, et non pas uniquement en raison de la présence de fibres conductrices dans les pièces à souder.

Les interfaces de soudage sont parfaitement interpénétrées, et après analyse du joint de soudure nous observons une rupture cohésive de la matrice thermoplastique.

### Exemple 6 - Soudabilité par induction de substrat non conducteur électrique.

Les pièces à souder sont des semi-produits commercialisés sous la dénomination Polystrand^{™} IE 7034B par PolyOne correspondant à un *tape* unidirectionnel thermoplastique à base de polypropylène. Ces semi-produits comprennent 70 % en masse de fibres de verre, ont une épaisseur de 0,25 mm/semi-produit et un grammage de 354 g/m². Les pièces à souder ont une épaisseur de 3 mm.

Deux pièces sont soudées à l'aide d'un robot industriel commercialisé par la société Kuka et d'un générateur de courant pour inducteur commercialisé par la société CEIA.

Les paramètres de soudage mis en œuvre sont les suivants :
Fréquence : 200 kHz ;
Matière de l'insert 4 : Acier ;
Pₘₐₓ limitée à 20 % de 12,5 kW ;
Distance entre l'inducteur et le substrat : 5 mm ;
Température de soudage : env 200 °C ;

Vitesse de déplacement de l'insert par rapport aux pièces à souder : 3,3 mm.s⁻¹.

Le produit de soudage présente une contrainte de cisaillement (τ) de 11,8 MPa, à savoir 97% de la contrainte de cisaillement de référence (pièce sans soudure), selon la norme prEN 6060, la référence (100 %) étant réalisée selon la même norme sur 5 éprouvettes.

### Exemple 7 - Soudabilité par induction d'un substrat de PEKK et fibres de carbone

Les pièces à souder sont des semi-produits comprenant du PEKK avec une température de fusion de 333 °C et des fibres de carbone. Ces matériaux ont subi une étape de consolidation en autoclave et un drapage comme suit :
Séquence d'orientation (orientation dans chaque couche de fibre) +45°, 0°, -45°, 90°, répétée 6 fois avec un plan de symétrie à la troisième répétition ;
Taux volumique de fibres des substrats à souder (TVF) de 60% +/-2% ;
Taux volumique de fibres du sous-produit d'interface ajouté (TVF) de 35% ; 150µm.

Le sous-produit d'interface est une nappe unidirectionnelle, il est positionné sur la surface à souder de façon à ce que les fibres soient orientées à 0° par rapport à la direction de soudure. Les pièces à souder ont une épaisseur de 4,4 mm.

Deux pièces sont soudées à l'aide d'un robot industriel commercialisé par la société Kuka et d'un générateur de courant pour inducteur commercialisé par la société CEIA.

Les paramètres de soudage mis en œuvre sont les suivants :
Fréquence : 200 kHz ;
Matière de l'insert 4 : Acier ;
Pₘₐₓ limitée à 30 % de 12,5 kW ;
Distance entre l'inducteur et le substrat : 5 mm ;
Température de soudage : 465 °C ;
Vitesse de déplacement de l'insert par rapport aux pièces à souder : 3,3 mm.s⁻¹.

Le produit de soudage présente une contrainte de cisaillement (τ) de 35 MPa, correspondant à une contrainte de cisaillement proche de celle du matériau des pièces 2, 3.

### Exemple 8 - Pilotage de la température (ou mode de régulation thermique) sur la zone de soudage par mesure et régulation (différent de celui envisagé avec le matériau de l'insert 4 à point de Curie)

La température au niveau de la zone de soudage a été testée à l'aide de pyromètre référencé SH15/SLE de chez CEIA.

Dans un premier essai, une rainure rectiligne est aménagée au milieu de la surface libre de l'une des deux pièces à souder, dans le sens de la direction de soudure. Un premier pyromètre est placé dans cette rainure et un second pyromètre latéral est placé sur le bord des pièces à souder, dans le prolongement de l'insert. Les pyromètres se déplacent conjointement à l'insert. Cet essai permet de démontrer que les températures de soudage mesurées respectivement par le premier pyromètre placé dans la rainure et le second pyromètre sont cohérentes (écart constant).

Dans un second essai, le pyromètre est placé uniquement sur le bord des pièces à souder, dans le prolongement de l'insert. Le pyromètre se déplace conjointement à l'insert.

Ces essais permettent de démontrer que l'utilisation d'un seul pyromètre placé sur le bord des pièces à souder et au niveau de l'insert est suffisant pour contrôler et piloter la température de la zone de soudage. Ils ont aussi permis de démontrer la nécessité d'avoir un mode de régulation thermique du suscepteur statique (avant démarrage du mouvement du robot) et dynamique indépendant et adapté.

### Exemple 9 - Mesure de la température de l'insert

Les matériaux et conditions sont identiques à ceux de l'exemple 7.

Lors de l'essai rainuré, une température en bord d'insert a été observée à 490°C pour une température au centre de la rainure de 465°C.

Il a alors été mis en œuvre des soudages (sans rainure) avec une température en bord d'insert 4 de 490°C.

### Exemple 10 - Indifférence de la distance entre le substrat et l'inducteur

Les pièces à souder sont des semi-produits commercialisés sous la dénomination Polystrand^{™} IE 7034B par PolyOne correspondant à un *tape* unidirectionnel thermoplastique à base de polypropylène. Ces semi-produits comprennent 70 % en masse de fibres de verre, ont une épaisseur de 0,25 mm/semi-produit et un grammage de 354 g/m². Les pièces à souder ont une épaisseur de 2 mm.

Deux pièces sont soudées (cf. les dispositifs selon l'exemple 6).

Les paramètres de soudage et de contrôle mis en œuvre sont les suivants :
Fréquence : 200 kHz ;
Matière de l'insert 4 : Acier ;
Pmax limitée à 25 % de 12,5 kW ;
Distance entre l'inducteur et le substrat : 5 mm, 10 mm et 15 mm ;
Température de soudage : env 180 °C.

Ces essais démontrent qu'il est possible de conserver une température de régulation du suscepteur constante quelle que soit la distance inducteur / substrat. La puissance réelle du générateur s'adapte et augmente avec la distance étudiée.

Ces essais démontrent, en outre, que, pour le matériau testé, la température de surface externe (surface libre supérieure) est de 110 à 120 °C en régime permanent, donc bien en-dessous du point de fusion de la matrice polypropylène, quelle que soit la distance entre l'inducteur et le substrat.

Ces essais ont été dupliqués sur un composites carbone tissé / PPS d'épaisseur 1,8 mm (référence CETEX TC1100 de chez Tencate), les conclusions sont identiques avec des distances inducteur / substrat de 10, 12, et 15mm. La température de régulation était de 300 °C ; la température de surface se stabilise à 245°C.

## Revendications

1. Procédé de soudage d'au moins deux pièces rigides (2, 3) comprenant un matériau thermoplastique et ayant des surfaces à souder respectives (10, 11), comprenant :
l'insertion d'un insert (4) entre les surfaces à souder (10, 11) des deux pièces (2, 3), ledit insert (4) ayant une épaisseur de 5 mm ou moins;
la fourniture de chaleur par ledit insert (4) ;
dans lequel l'insert se déplace par rapport aux pièces à souder (2, 3) lors du soudage, selon une direction de soudage ;
**caractérisé en ce que** l'insert comprend un matériau sensible à l'induction, et la chaleur de l'insert est fournie par la génération d'un champ magnétique par au moins un inducteur (5).

2. Procédé selon la revendication 1, comprenant en outre la mise en contact des surfaces à souder (10, 11) des deux pièces à souder (2, 3) par application d'une pression sur au moins une des deux pièces (2, 3) en amont et/ou en aval de la position de l'insert (4) par rapport à la direction du soudage.

3. Procédé selon l'une des revendications précédentes, dans lequel l'insert (4) est en contact avec chacune des surfaces à souder (10, 11) des deux pièces (2, 3).

4. Procédé selon l'une des revendications précédentes, dans lequel au moins une des deux pièces (2, 3), de préférence les deux pièces (2, 3), est en matériau composite comprenant des fibres de renfort dans une matrice du matériau thermoplastique ; préférentiellement en matériau composite comprenant des fibres de renfort choisies parmi des fibres de carbone et/ou des fibres de verre dans une matrice du matériau thermoplastique.

5. Procédé selon l'une des revendications précédentes, dans lequel le matériau thermoplastique est choisi parmi le groupe des polyamides, des polyimides, en particulier les polyétherimides, des polyaryléthercétones, en particulier les polyéthercétonecétones et polyétheréthercétones, du polytéréphtalate d'éthylène, des polyoléfines, en particulier le polypropylène, du polysulfure de phénylène, des polysulfones, des polymères chlorés, en particulier le polychlorure de vinyle (PVC) et le polyfluorure de vinylidène (PVDF), des polymères acryliques ou méthacryliques, et est de préférence un polyaryléthercétone tel que le polyéthercétonecétone ou le polyétherethercétone.

6. Procédé selon l'une des revendications précédentes, dans lequel au moins une des deux pièces (2, 3), de préférence les deux pièces (2, 3), est une structure multicouche.

7. Procédé selon l'une des revendications précédentes, dans lequel les pièces (2, 3) sont des pièces de fuselage d'avion.

8. Installation de soudage d'au moins deux pièces rigides (2, 3) comprenant un matériau thermoplastique et ayant des surfaces à souder (10, 11) respectives, comprenant :
un support pour porter les deux pièces à souder (2, 3) ;
un bras (8) comportant à son extrémité un insert de chauffe (4) ayant une épaisseur de 5 mm ou moins, configuré pour être inséré entre les surfaces à souder (10, 11) des deux pièces (2, 3) ;
l'insert (4) étant configuré pour se déplacer par rapport aux pièces (2, 3) à souder lors du soudage, selon une direction de soudage ;
**caractérisée en ce que** l'installation comprend un dispositif de génération de chaleur dudit insert par induction, ledit dispositif de génération de chaleur étant au moins un inducteur, et ledit insert comprenant un matériau sensible à l'induction.

9. Installation selon la revendication 8, comprenant en outre un ou plusieurs rouleaux de compactage (6), de préférence configurés pour être animés d'une vibration à fréquence adaptée, et/ou un ou plusieurs rouleaux de plaquage.

10. Installation selon l'une des revendications 8 et 9, comprenant une enceinte à température contrôlée (14), qui de préférence comporte une jupe souple.

11. Installation selon l'une des revendications 8 à 10, dans laquelle le support est configuré pour être chauffé.

## Patentansprüche

1. Verfahren zum Verschweißen von mindestens zwei starren Teilen (2, 3), umfassend einen thermoplastischen Kunststoff und aufweisend jeweilige zu verschweißende Oberflächen (10, 11), umfassend:
Einführen eines Einsatzes (4) zwischen die zu verschweißenden Oberflächen (10, 11) der zwei Teile (2, 3), wobei der Einsatz (4) eine Dicke von 5 mm oder weniger aufweist;
Bereitstellen von Wärme an den Einsatz (4);
wobei sich der Einsatz mit Bezug auf die zu verschweißenden Teile (2, 3) bei der Schweißung gemäß einer Schweißrichtung verschiebt;
**dadurch gekennzeichnet, dass** der Einsatz ein induktionssensibles Material umfasst und die Wärme des Einsatzes durch das Erzeugen eines magnetischen Felds durch mindestens einen Induktor (5) bereitgestellt wird.

2. Verfahren nach Anspruch 1, umfassend außerdem das In-Kontakt-Bringen der zu verschweißenden Oberflächen (10, 11) der zwei zu verschweißenden Teile (2, 3) durch Anwenden eines Drucks auf mindestens einen der zwei Teile (2, 3) vorgelagert und/oder nachgelagert von der Position des Einsatzes (4) mit Bezug auf die Schweißrichtung.

3. Verfahren nach einem der vorhergehenden Ansprüche, wobei der Einsatz (4) in Kontakt mit jeder der zu verschweißenden Oberflächen (10, 11) der zwei Teile (2, 3) ist.

4. Verfahren nach einem der vorhergehenden Ansprüche, wobei mindestens einer der zwei Teile (2, 3), vorzugsweise die zwei Teile (2, 3) aus Verbundmaterial ist, umfassend Verstärkungsfasern in einer Matrix des thermoplastischen Kunststoffs, vorzugsweise aus Verbundmaterial, umfassend Verstärkungsfasern, die ausgewählt sind aus den Kohlestofffasern und/oder Glasfasern in einer Matrix des thermoplastischen Kunststoffs.

5. Verfahren nach einem der vorhergehenden Ansprüche, wobei der thermoplastische Kunststoff ausgewählt ist aus der Gruppe der Polyamide, der Polyimide, insbesondere der Polyetherimide, der Polyaryletherketone, insbesondere der Polyetherketonketone und Polyetheretherketone, dem Ethylenpolyterephtalat, den Polyolefinen, insbesondere dem Polypropylen, dem Polypehnylensulfid, den Polysulfonen, den chlorierten Polymeren, insbesondere dem Polyvinylchlorid (PVC) und dem Polyvinylidenfluorid (PVDF), den Acryl- oder Methacrylpolymeren und vorzugsweise ein Polyaryletherketon wie das Polyetherketonketeon oder das Polyetheretherketon ist.

6. Verfahren nach einem der vorhergehenden Ansprüche, wobei mindestens einer der zwei Teile (2, 3), vorzugsweise die zwei Teile (2, 3), eine mehrschichtige Struktur ist.

7. Verfahren nach einem der vorhergehenden Ansprüche, wobei die Teile (2, 3) Flugzeugrumpfteile sind.

8. Anlage zum Schweißen von mindestens zwei starren Teilen (2, 3), umfassend einen thermoplastischen Kunststoff und aufweisend jeweilige zu verschweißende Oberflächen (10, 11),
eine Stütze, um die zwei zu verschweißenden Teile (2, 3) zu tragen,
einen Arm (8), der an seinem Ende einen Heizeinsatz (4) umfasst, der eine Dicke von 5 mm oder weniger aufweist, konfiguriert, um zwischen den zu verschweißenden Oberflächen (10, 11) der zwei Teile (2, 3) eingeführt zu sein;
wobei der Einsatz (4) konfiguriert ist, um sich mit Bezug auf die zu verschweißenden Teile (2, 3) bei der Schweißung gemäß einer Schweißrichtung zu verschieben;
**dadurch gekennzeichnet, dass** die Anlage eine Vorrichtung zum Erzeugen von Wärme des Einsatzes durch Induktion umfasst, wobei die Vorrichtung zum Erzeugen von Wärme mindestens ein Induktor ist und der Einsatz ein induktionssensibles Material umfasst.

9. Anlage nach Anspruch 8, umfassend außerdem eine oder mehrere Kompaktierrollen (6), die vorzugsweise konfiguriert sind, um mit einer Vibration mit angepasster Frequenz bewegt zu werden, und/oder eine oder mehrere Plattierrollen.

10. Anlage nach einem der Ansprüche 8 und 9, umfassend einen Bereich mit kontrollierter Temperatur (14), der vorzugsweise eine flexible Schürze umfasst.

11. Anlage nach einem der Ansprüche 8 bis 10, wobei die Stütze konfiguriert ist, um erhitzt zu werden.

## Claims

1. A method for welding at least two rigid parts (2, 3) comprising a thermoplastic material and having respective surfaces to be welded (10, 11), comprising:
inserting an insert (4) between the surfaces to be welded (10, 11) of the two parts (2, 3), said insert (4) having a thickness of 5 mm or less;
providing heat via said insert (4);
wherein the insert moves in relation to the parts to be welded (2, 3) at the time of welding, in the welding direction; and
**characterized in that** the insert comprises an induction-sensitive material, and the heat of the insert is provided by the generation of a magnetic field by at least one inductor (5).

2. The method according to claim 1, further comprising the contacting of the surfaces to be welded (10, 11) of the two parts to be welded (2, 3) by applying pressure onto at least one of the two parts (2, 3) upstream and/or downstream of the position of the insert (4) in relation to the welding direction.

3. The method according to one of the preceding claims, wherein the insert (4) is in contact with each of the surfaces to be welded (10, 11) of the two parts (2, 3).

4. The method according to one of the preceding claims, wherein at least one of the two parts (2, 3), preferably both parts (2, 3), are in composite material comprising reinforcing fibres in a matrix of thermoplastic material; preferably in composite material comprising reinforcing fibres selected from among carbon fibres and/or glass fibres in a matrix of the thermoplastic material.

5. The method according to one of the preceding claims, wherein the thermoplastic material is selected from the group of polyamides, polyimides in particular polyetherimides, polyaryletherketones in particular polyetherketoneketones and polyetheretherketones, polyethylene terephthalate, polyolefins in particular polypropylene, phenylene polysulfide, polysulfones, chlorinated polymers in particular polyvinyl (PVC) and polyvinylidene fluoride (PVDF), acrylic or methacrylic polymers, and is preferably a polyaryletherketone such as polyetherketoneketone or polyetheretherketone.

6. The method according to one of the preceding claims, wherein at least one of the two parts (2, 3), preferably both parts, are a multilayer structure. (2, 3).

7. The method according to one of the preceding claims, wherein the parts (2, 3) are aircraft fuselage parts.

8. An installation for welding at least two rigid parts (2, 3) comprising a thermoplastic material and having respective surfaces to be welded (10, 11) comprising:
a support to hold the two parts to be welded (2, 3);
an arm (8) comprising at its end portion a heating insert (4) having a thickness of 5 mm or less, configured to be inserted between the surfaces to be welded (10, 11) of the two parts (2, 3);
the insert (4) being configured to move in relation to the parts to be welded (2, 3) at the time of welding, in a welding direction;
**characterized in that** the installation comprises a heat-generating device of said insert via induction, the heat-generating device being at least one inductor, and said insert comprises an induction-sensitive material.

9. The installation according to claim 8, further comprising one or more compacting rollers (6), preferably configured to be subjected to vibration at an adapted frequency, and/or one or more pressure rollers.

10. The installation according to claims 8 and 9, comprising a controlled-temperature chamber (14), which preferably comprises a flexible skirt.

11. The installation according to one of claims 8 to 10, wherein the support is configured to be heated.
